# EUROPEAN PATENT APPLICATION

(11) **EP 4 787 934 A1**
(43) Date of publication of application: **05.08.2026**
(21) Application number: 23953817.6
(22) Date of filing: 28.09.2023
(51) Int. Cl.: H04W 24/08

(54) **MODEL MONITORING METHOD AND APPARATUS, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: LIU, Zhengxuan, Beijing 100085 (CN); LIU, Min, Beijing 100085 (CN)
(74) Representative: Stöckeler, Ferdinand
(86) International application number: PCT/CN2023/122984
(87) International publication number: WO 2025/065673

(57) **Abstract**

Disclosed in embodiments of the present disclosure are a model monitoring method and apparatus. The method comprises: receiving first information sent by a first network device, wherein the first information is used for monitoring at least one inactive model pair, and acquiring channel information, wherein the channel information is obtained by means of performing channel measurement on a reference signal sent by the first network device, the channel information is used for monitoring the at least one inactive model pair, and the monitoring the at least one inactive model pair comprises monitoring a terminal part model and/or a network part model in each model pair, such that inactive models deployed in a system can be effectively monitored, and thus a network side can select an appropriate model for activation in a timely manner on the basis of requirements, thereby effectively improving the performance of system and improving the communication efficiency of the system.

## Description

### TECHNICAL FIELD

The disclosure relates to the field of communication technologies, and in particular to a model monitoring method and apparatus, a communication device, a communication system and a storage medium.

### BACKGROUND

In recent years, artificial intelligence (AI) technology has achieved continuous breakthroughs in various fields and is accelerating its integration with other disciplines. In the field of mobile communication technology, AI can also be introduced into wireless air interface technologies, such as AI-based channel state information (CSI) feedback.

### SUMMARY

The present disclosure provides a model monitoring method and apparatus, a communication device, a communication system and a storage medium.

According to a first aspect of embodiments of the present disclosure, a model monitoring method is provided. The method is performed by a terminal, and includes:
receiving first information sent by a first network device, wherein the first information is configured for monitoring of at least one inactive model pair; and obtaining channel information, wherein the channel information is obtained by performing channel measurement on a reference signal sent by the first network device, and the channel information is configured for the monitoring of the at least one inactive model pair; wherein the monitoring of the at least one inactive model pair includes monitoring of a terminal part model and/or a network part model in each model pair.

According to a second aspect of embodiments of the present disclosure, a model monitoring method is provided. The method is performed by a first network device, and includes:
sending first information to a terminal, wherein the first information is configured for monitoring of at least one inactive model pair; and sending a reference signal to the terminal, wherein the reference signal is configured for the terminal to perform channel measurement to obtain channel information, and the channel information is configured for the monitoring of the at least one inactive model pair; wherein the monitoring of the at least one inactive model pair includes monitoring of a terminal part model and/or a network part model in each model pair.

According to a third aspect of embodiments of the present disclosure, a model monitoring method is provided. The method includes:
sending by a first network device, first information to a terminal, wherein the first information is configured for monitoring of at least one inactive model pair; and obtaining by the terminal, channel information, wherein the channel information is obtained by performing channel measurement on a reference signal sent by the first network device, and the channel information is configured for the monitoring of the at least one inactive model pair; wherein the monitoring of the at least one inactive model pair includes monitoring of a terminal part model and/or a network part model in each model pair.

According to a fourth aspect of embodiments of the present disclosure, a terminal is provided. The terminal includes:
a transceiver module, configured to receive first information sent by a first network device, wherein the first information is configured for monitoring of at least one inactive model pair; and a processing module, configured to obtain channel information, wherein the channel information is obtained by performing channel measurement on a reference signal sent by the first network device, and the channel information is configured for the monitoring of the at least one inactive model pair; wherein the monitoring of the at least one inactive model pair includes monitoring of a terminal part model and/or a network part model in each model pair.

According to a fifth aspect of embodiments of the present disclosure, a first network device is provided. The first network device includes:
a transceiver module, configured to send first information to a terminal, wherein the first information is configured for monitoring of at least one inactive model pair; wherein the transceiver module is further configured to send a reference signal to the terminal, wherein the reference signal is configured for the terminal to perform channel measurement to obtain channel information, and the channel information is configured for the monitoring of the at least one inactive model pair; wherein the monitoring of the at least one inactive model pair includes monitoring of a terminal part model and/or a network part model in each model pair.

The solution proposed in embodiments of the present disclosure involves receiving the first information sent by the first network device, wherein the first information is configured for monitoring of at least one inactive model pair; and obtaining channel information, which is obtained from performing channel measurement on the reference signal sent by the first network device, and is also configured for monitoring of the at least one inactive model pair, wherein the monitoring of the at least one inactive model pair includes monitoring of the terminal part model and/or the network part model in each model pair. This enables effective monitoring of inactive models deployed in the system, allowing the network side to promptly select and activate suitable models as needed, thereby effectively improving system performance and enhancing communication efficiency.

### BRIEF DESCRIPTION OF THE DRAWINGS

To more clearly illustrate the technical solutions in the embodiments or background technology of the present disclosure, the accompanying drawings required for the embodiments or background technology will be described below.
FIG. 1A is a schematic diagram illustrating an architecture of a communication system according to embodiments of the disclosure.
FIG. 1B is a schematic diagram of implementing CSI compression feedback and recovery based on a bilateral AI/ML model provided in embodiments of the present disclosure.
FIG. 2A-FIG. 2F are schematic diagrams illustrating interaction in a model monitoring method provided in embodiments of the present disclosure.
FIG. 3A-FIG. 3F are schematic flowcharts of a model monitoring method provided in embodiments of the present disclosure.
FIG. 4A-FIG. 4F are schematic flowcharts of a model monitoring method provided in embodiments of the present disclosure.
FIG. 5A-FIG. 5B are schematic diagrams illustrating interaction in a model monitoring method provided in embodiments of the present disclosure.
FIG. 6A is a block diagram of a terminal provided in an embodiment of the present disclosure.
FIG. 6B is a block diagram of a network device provided in an embodiment of the present disclosure.
FIG. 7A is a block diagram of a communication device provided in an embodiment of the present disclosure.
FIG. 7B is a block diagram of a chip provided in an embodiment of the present disclosure.

### DETAILED DESCRIPTION

Embodiments of the present disclosure provide a model monitoring method and apparatus, a communication device, a communication system and a storage medium.

In a first aspect, embodiments of the present disclosure provide a model monitoring method. The method is performed by a terminal, and includes: receiving first information sent by a first network device, wherein the first information is configured for monitoring of at least one inactive model pair; and obtaining channel information, wherein the channel information is obtained by performing channel measurement on a reference signal sent by the first network device, and the channel information is configured for the monitoring of the at least one inactive model pair; wherein the monitoring of the at least one inactive model pair includes monitoring of a terminal part model and/or a network part model in each model pair.

In the above embodiments, inactive models deployed in the system can be effectively monitored, so that the network side can timely select suitable models for activation according to needs, effectively improving system performance and enhancing system communication efficiency.

In combination with some embodiments of the first aspect, in some embodiments, the first information is configured to indicate the terminal to obtain a monitoring result of the at least one inactive model pair, and the method further includes: sending the channel information and/or the first information to a second network device; receiving the monitoring result of the at least one inactive model pair sent by the second network device, wherein the monitoring result is determined by the second network device based on the channel information; and sending the monitoring result to the first network device.

In combination with some embodiments of the first aspect, in some embodiments, the first information is configured to indicate the terminal to send the channel information, and the method further includes: sending the channel information to the first network device, wherein the channel information is configured for a third network device to determine a monitoring result of the at least one inactive model pair based on the channel information.

In combination with some embodiments of the first aspect, in some embodiments, the first information is configured to indicate the terminal to obtain a monitoring result of the at least one inactive model pair, and the method further includes: determining the monitoring result of the at least one inactive model pair based on the channel information; and sending the monitoring result to the first network device.

In combination with some embodiments of the first aspect, in some embodiments, the first information is configured to indicate the terminal to send the channel information, and the method further includes: sending the channel information to the first network device, wherein the channel information is configured for the first network device to determine a monitoring result of the at least one inactive model pair based on the channel information.

In combination with some embodiments of the first aspect, in some embodiments, the first information includes at least one of: identification information of the at least one inactive model pair; a first threshold, wherein the first threshold is configured for determining the monitoring result; or a format of the monitoring result.

In combination with some embodiments of the first aspect, in some embodiments, the first information is configured to indicate the terminal to activate one or more of the at least one inactive model pair, and the method further includes: inputting the channel information into one or more activated model pairs, to obtain output information of a terminal part model in the activated model pair; and sending the channel information and the output information of the terminal part model to the first network device, wherein the channel information and the output information of the terminal part model are configured for the first network device to determine a monitoring result of the one or more activated model pairs.

In combination with some embodiments of the first aspect, in some embodiments, the first information is configured to indicate the terminal to activate one or more of the at least one inactive model pair, and the method further includes: inputting the channel information into one or more activated model pairs, to obtain output information of a terminal part model in the activated model pair; sending the output information of the terminal part model to the first network device, wherein the output information of the terminal part model is configured for the first network device to determine output information of a network part model in the activated model pair; receiving second information sent by the first network device, wherein the second information is the output information of the network part model, or a channel status information reference signal (CSI-RS) for beamforming, wherein a beam corresponding to the CSI-RS is determined based on the output information of the network part model; determining a monitoring result of the one or more activated model pairs based on the channel information and the second information; and sending the monitoring result to the first network device.

In combination with some embodiments of the first aspect, in some embodiments, the first information is sent multiple times, and the first information sent each time indicates a different model pair to be activated.

In combination with some embodiments of the first aspect, in some embodiments, the terminal sends output information of terminal part models in multiple model pairs to the first network device, and the method further includes: sending third information to the first network device, wherein the third information is configured to determine a correspondence relationship between the output information of the terminal part model and the model pair.

In combination with some embodiments of the first aspect, in some embodiments, the method further includes: sending a first request to the first network device, wherein the first request is configured to request the first network device to send the first information.

In combination with some embodiments of the first aspect, in some embodiments, the first request is sent periodically; or the first request is sent semi-continuously; or
the first request is sent non-periodically; or the first request is triggered and sent based on an event.

In combination with some embodiments of the first aspect, in some embodiments, the first information includes identification information of one or more model pairs to be activated.

In combination with some embodiments of the first aspect, in some embodiments, the method further includes: sending fourth information to the first network device, wherein the fourth information indicates an inactive model currently supported by the terminal.

In combination with some embodiments of the first aspect, in some embodiments, the first information is contained in at least one of: a radio resource control (RRC) signaling; a media access control control element (MAC-CE) signaling; or a downlink control information (DCI) signaling.

In a second aspect, embodiments of the present disclosure provide a model monitoring method. The method is performed by a network device and includes: sending first information to a terminal, wherein the first information is configured for monitoring of at least one inactive model pair; and sending a reference signal to the terminal, wherein the reference signal is configured for the terminal to perform channel measurement to obtain channel information, and the channel information is configured for the monitoring of the at least one inactive model pair; wherein the monitoring of the at least one inactive model pair includes monitoring of a terminal part model and/or a network part model in each model pair.

In the above embodiments, inactive models deployed in the system can be effectively monitored, so that the network side can timely select suitable models for activation according to needs, effectively improving system performance and enhancing system communication efficiency.

In combination with some embodiments of the second aspect, in some embodiments, the first information is configured to indicate the terminal to obtain a monitoring result of the at least one inactive model pair, and the method further includes: receiving the monitoring result of the at least one inactive model pair sent by the terminal, wherein the monitoring result is determined by a second network device based on the channel information and sent by the second network device to the terminal.

In combination with some embodiments of the second aspect, in some embodiments, the first information is configured to indicate the terminal to send the channel information, and the method further includes: receiving the channel information sent by the terminal; and sending the channel information to a third network device, wherein the channel information is configured for the third network device to determine a monitoring result of the at least one inactive model pair based on the channel information.

In combination with some embodiments of the second aspect, in some embodiments, the first information is configured to indicate the terminal to obtain a monitoring result of the at least one inactive model pair, and the method further includes: receiving the monitoring result of the at least one inactive model pair sent by the terminal, wherein the monitoring result is determined by the terminal based on the channel information.

In combination with some embodiments of the second aspect, in some embodiments, the first information is configured to indicate the terminal to send the channel information, and the method further includes: receiving the channel information sent by the terminal; and determining a monitoring result of the at least one inactive model pair based on the channel information.

In combination with some embodiments of the second aspect, in some embodiments, the first information includes at least one of: identification information of the at least one inactive model pair; a first threshold, wherein the first threshold is configured for determining the monitoring result; or a format of the monitoring result.

In combination with some embodiments of the second aspect, in some embodiments, the first information is configured to indicate the terminal to activate one or more of the at least one inactive model pair, and the method further includes: receiving the channel information and output information of a terminal part model in an activated model pair sent by the terminal, wherein the output information of the terminal part model is obtained by the terminal through inputting the channel information into one or more activated model pairs; and determining a monitoring result of the one or more activated model pairs based on the channel information and the output information of the terminal part model.

In combination with some embodiments of the second aspect, in some embodiments, the first information is configured to indicate the terminal to activate one or more of the at least one inactive model pair, and the method further includes: receiving the channel information and output information of a terminal part model in an activated model pair sent by the terminal, wherein the output information of the terminal part model is obtained by the terminal through inputting the channel information into one or more activated model pairs; inputting the output information of the terminal part model into the one or more activated model pairs, to determine output information of a network part model in the activated model pair; sending second information to the terminal, wherein the channel information and the second information are configured for the terminal to determine a monitoring result of the one or more activated model pairs; wherein the second information is the output information of the network part model, or a channel status information reference signal (CSI-RS) for beamforming, wherein a beam corresponding to the CSI-RS is determined based on the output information of the network part model; and receiving the monitoring result sent by the terminal.

In combination with some embodiments of the second aspect, in some embodiments, the first information is sent multiple times, and the first information sent each time indicates a different model pair to be activated.

In combination with some embodiments of the second aspect, in some embodiments, the terminal sends output information of terminal part models in multiple model pairs to the first network device, and the method further includes: receiving third information sent by the terminal, wherein the third information is configured to determine a correspondence relationship between the output information of the terminal part model and the model pair.

In combination with some embodiments of the second aspect, in some embodiments, the method further includes: receiving a first request sent by the terminal, wherein the first request is configured to request the first network device to send the first information.

In combination with some embodiments of the second aspect, in some embodiments, the first request is sent periodically; or the first request is sent semi-continuously; or the first request is sent non-periodically; or the first request is triggered and sent based on an event.

In combination with some embodiments of the second aspect, in some embodiments, the first information includes identification information of one or more model pairs to be activated.

In combination with some embodiments of the second aspect, in some embodiments, the method further includes: receiving fourth information sent by the terminal, wherein the fourth information indicates an inactive model currently supported by the terminal; and determining a number of activated model pairs indicated by the first information based on the fourth information.

In combination with some embodiments of the second aspect, in some embodiments, the first information is contained in at least one of: a radio resource control (RRC) signaling; a media access control control element (MAC-CE) signaling; or a downlink control information (DCI) signaling.

In a third aspect, embodiments of the present disclosure provide a model monitoring method. The method includes: sending by a first network device, first information to a terminal, wherein the first information is configured for monitoring of at least one inactive model pair; and obtaining by the terminal, channel information, wherein the channel information is obtained by performing channel measurement on a reference signal sent by the first network device, and the channel information is configured for the monitoring of the at least one inactive model pair; wherein the monitoring of the at least one inactive model pair includes monitoring of a terminal part model and/or a network part model in each model pair.

In the above embodiments, inactive models deployed in the system can be effectively monitored, so that the network side can timely select suitable models for activation according to needs, effectively improving system performance and enhancing system communication efficiency.

In a fourth aspect, embodiments of the present disclosure provide a terminal. The terminal includes at least one of a transceiver module or a processing module. The terminal is configured to implement the first aspect and optional implementations of the first aspect.

In a fifth aspect, embodiments of the present disclosure provide a first network device. The first network device includes at least one of a transceiver module or a processing module. The first network device is configured to implement the second aspect and optional implementations of the second aspect.

In a sixth aspect, embodiments of the present disclosure provide a terminal. The terminal includes one or more processors. The terminal is configured to implement the first aspect and optional implementations of the first aspect.

In a seventh aspect, embodiments of the present disclosure provide a first network device. The first network device includes one or more processors. The first network device is configured to implement the second aspect and optional implementations of the second aspect.

In an eighth aspect, embodiments of the present disclosure provide a communication system. The communication system includes a terminal and a first network device. The terminal is configured to implement the method described in the first aspect and optional implementations of the first aspect, and the network device is configured to implement the method described in the second aspect and optional implementations of the second aspect.

In a ninth aspect, embodiments of the present disclosure provide a storage medium. The storage medium stores instructions, wherein when the instructions are run on a communication device, the communication device is caused to implement the method described in the first aspect, optional implementations of the first aspect, the second aspect, or optional implementations of the second aspect.

In a tenth aspect, embodiments of the present disclosure provide a program product. When the program product is executed by a communication device, the communication device is caused to implement the method described in the first aspect, optional implementations of the first aspect, the second aspect, or optional implementations of the second aspect.

In an eleventh aspect, embodiments of the present disclosure provide a computer program. When the computer program is run on a computer, the computer is caused to implement the method described in the first aspect, optional implementations of the first aspect, the second aspect, or optional implementations of the second aspect.

In a twelfth aspect, embodiments of the present disclosure provide a chip or chip system. The chip or chip system includes a processing circuit, configured to implement the method described in the first aspect, optional implementations of the first aspect, the second aspect, or optional implementations of the second aspect.

It may be understood that the terminal, the first network device, the communication system, the storage medium, the program product, the computer program, and the chip or chip system are all used to implement the method in embodiments of the disclosure. Thus, regarding beneficial effects they may achieve, reference may be made to the beneficial effects in the corresponding methods, which will not be repeated herein.

Embodiments of the disclosure provide a model monitoring method and apparatus, a communication device, a communication system, and a storage medium. In some embodiments, terms such as "model monitoring method", and "communication method" may be used interchangeably, terms such as "model monitoring apparatus", and "communication device" may be used interchangeably, and terms such as "model monitoring system" and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In various embodiments of the disclosure, unless otherwise specified or there is a logical conflict, the terms and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and the device etc. may be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" can be interpreted as devices contained within the network (e.g., access network devices, core network devices, etc.)

In some embodiments, the terms such as "access network device (AN device)", "radio access network device (RAN device)", "base station (BS)", "radio base station", "fixed station". In some embodiments, they may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

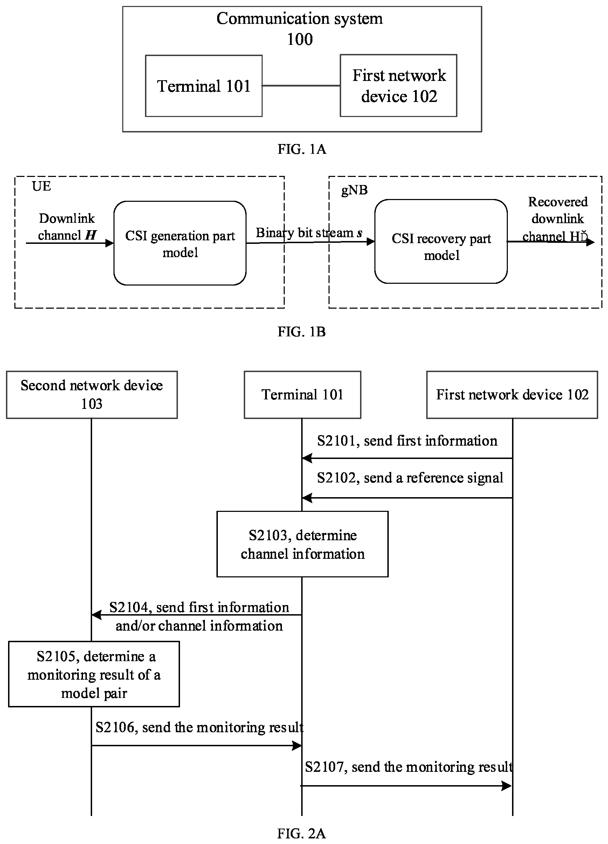

FIG. 1 is a schematic diagram illustrating an architecture of a communication system according to an embodiment of the disclosure.

As shown in FIG. 1, the communication system 100 includes a terminal 101, a first network device 102, a second network device 103 and a third network device 104.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the first network device 102 may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the second network device 103 and the third network device are, for example, devices capable of computing, processing, and communicating, such as servers, third-party servers, over-the-top servers (OTT), and so on, but not limited to these.

Optionally, the second network device 103 may be a server deployed on the terminal side.

Optionally, the third network device 104 may be a server deployed on the network side.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

It may be understood that the communication system described in embodiments of the disclosure aims to more clearly illustrate the technical solution of embodiments of the disclosure, and does not constitute a limitation on the technical solution proposed in embodiments of the disclosure. A person skilled in the art may know that with the evolution of the system architecture and the emergence of new service scenarios, the technical solution proposed in embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects other than those shown in FIG. 1. The number and form of the subjects are arbitrary. The connection relationships between the subjects are examples. The subjects may be connected or disconnected, and the connection may be in any manner, which may be a direct connection or an indirect connection, or may be a wired connection or a wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may be applied.

In recent years, artificial intelligence (AI) technology has made continuous breakthroughs in multiple fields, and AI technology is also accelerating its cross penetration with other disciplines.

In some embodiments, a bilateral AI/machine learning (ML) model based on a terminal side channel status information (CSI) generation part model and a network side CSI recovery part model is developed to achieve CSI compression feedback and recovery, respectively.

In some embodiments, as shown in FIG. 1B, which is a schematic diagram of implementing CSI compression feedback and recovery based on a bilateral AI/ML model provided by in embodiments of the present disclosure, the UE side can compress the downlink channel information H through the CSI generation part model, quantize it into a binary bit stream, and send it to the gNB. The gNB side can recover H' that is similar to the original downlink information through the CSI recovery part model.

In some embodiments, the CSI generation part model and CSI recovery part model mentioned above need to be trained on a collected dataset. The types of training the CSI generation part model and the CSI recovery part model include at least one of the following three types.

Type 1: Train the models on one side (such as the terminal side or network side), and then send the trained part model to the other side.

Type 2: Train the CSI generation part model and CSI recovery part model separately on the terminal side and network side through joint training. Alternatively, after training one part model on one of the terminal side or the network side, another part model of the bilateral model can be trained on the other side without updating the parameters of the first trained part model.

Type 3: First, complete the model training on one side, and then send the training data or other auxiliary information to the other side to complete the training of another part model.

Optionally, the above type 3 can be further classified into network side first training and terminal side first training:
The network side first training (NW-first training): The network side first trains the CSI generation part model and the CSI recovery part model, and then sends the dataset and/or other auxiliary information for training the CSI generation part model to the terminal side.

The terminal side first training (UE-first training): The terminal side first trains the CSI generation part model and the CSI recovery part model, and then sends the dataset and/or other auxiliary information for training the CSI recovery part model to the network side.

After the above training method, the CSI generation part model and CSI recovery part model are obtained, or these two part models are referred to as a model pair. For the part models or model pairs, lifecycle management of these models, such as activating, deactivating, and updating specific models, can be achieved through model identification, function identification, and model pair identification.

In some embodiments, performance monitoring of the model can also be included in the lifecycle management process of the model, and the indicators for monitoring the performance of AI/ML model may include at least one of the following:
Intermediate Key Performance Indicator (KPI), such as Square Generalized Cosine Similarity (SGCS), etc;
Final KPI, such as throughput, Block Error Rate (BLER), assumed BLER or Negative Acknowledgment (NACK) message or Acknowledgment (ACK) message, etc;
Comparison with traditional CSI feedback reporting;
Input or output data distribution of the AI/ML model, such as the data drift between training data and observation data.

Optionally, the traditional CSI feedback reporting includes CSI measurement and reporting based on Type I or Type II codebooks, where the codebook type or parameters are configured by NW for the UE.

In order to better improve the performance of the system, UE or gNB not only needs to monitor the performance of active or in use models, but also needs to monitor inactive models or model pairs, in order to activate a suitable model for CSI compression feedback when needed by the network. When monitoring multiple inactive models, the following problems need to be considered.

Problem 1: When UE or gNB monitors inactive models, if multiple inactive models' inference, storage of inference results, and calculation of KPIs are performed simultaneously, it will consume more power or memory space for UE or gNB.

Problem 2: When monitoring the performance of inactive models by the UE, it is necessary to consider the UE's ability to simultaneously run multiple model inference and whether it supports simultaneous inference of more models.

Problem 3: Simultaneously activating and monitoring performance calculations for multiple models will require more processing time, power consumption, or signaling overhead.

The following provides a detailed introduction to the model monitoring method and apparatus provided in this disclosure, in conjunction with the accompanying drawings.

FIG. 2A is a schematic diagram illustrating interaction in a model monitoring method according to an embodiment of the present disclosure. As shown in FIG. 2A, this embodiment of the present disclosure relates to a model monitoring method. The method includes the following steps.

At step S2101, a first network device 102 sends first information to a terminal 101.

In some embodiments, the terminal 101 receives the first information.

In some embodiments, the first information is configured for monitoring of at least one inactive model pair.

In some embodiments, the name of the first information is not limited and may include, for example, "indication information," "monitoring indication," "model monitoring indication," "inactive model monitoring indication," and the like.

In some embodiments, the first information is configured to indicate the terminal 101 to obtain monitoring results of the aforementioned at least one inactive model pair.

In some embodiments, the first information is included in at least one of: a Radio Resources Control (RRC) signaling; a Medium Access Control-Control Element (MAC-CE) signaling; or a Downlink Control Information (DCI) signaling.

In some embodiments, the model pair includes a terminal part model and a network part model.

In some embodiments, the at least one model pair indicated by the first information may include all the inactive models deployed on the terminal and network, or a portion of the inactive models.

In some embodiments, the monitoring of the at least one model pair includes monitoring of the terminal part model and/or the network part model in each model pair.

In some embodiments, the monitoring of at least one model pair includes the monitoring of the terminal part model and the network part model in each model pair.

In some embodiments, the monitoring of at least one model pair includes the monitoring of the terminal part model in each model pair.

In some embodiments, the monitoring of at least one model pair includes the monitoring of the network part model in each model pair.

In some embodiments, the first information includes at least one of: identification information of the at least one inactive model pair (e.g., model ID, etc.); a first threshold; or a format of the monitoring result.

The first threshold is configured to determine the monitoring result.

Optionally, the monitoring result may be in at least one of the following multiple formats:
one or more intermediate KPIs (e.g., SGCS, etc.) calculated;
one or more final KPIs (such as throughput, BLER, assumed BLER, NACK message, or ACK message, etc.) calculated;
whether to activate the corresponding model pair, which is determined based on the first threshold; or
performance evaluation determined based on the first threshold (e.g., whether the performance is good or poor, etc.).

Optionally, in some embodiments, the format of the monitoring result is based on whether the corresponding model pair is activated determined according to the first threshold, and if it is determined to not activate any of the at least one model pair, the monitoring result may be reverted to the traditional non-AI CSI feedback result.

In some embodiments, the format of the monitoring result may be configured by the network, specified by the protocol, or predefined through negotiation between the network and the terminal, which is not limited in this embodiment.

In some embodiments, the terminal 101 may send a first request to the first network device 102, wherein the first request is configured to request the first network device 102 to send the first information.

Optionally, the first request includes identification information for the at least one inactive model pair.

Optionally, the terminal 101 sends the first request using one of the following ways: periodically, semi-persistently, non-periodically, or event-triggered.

At step S2102, the first network device 102 sends a reference signal to the terminal 101.

In some embodiments, the terminal 101 receives the reference signal.

In some embodiments, the reference signal is a downlink pilot.

In some embodiments, the terminal 101 can measure the reference signal to obtain channel information.

At step S2103, the terminal 101 determines channel information.

In some embodiments, the terminal 101 determines the channel information based on the reference signal mentioned above.

In some embodiments, the terminal 101 can measure the reference signal to obtain the channel information.

Optionally, the channel information may be the original channel information estimated by the terminal 101, or the feature vector information determined after singular value decomposition calculation of the channel information by the terminal 101, which is not limited in this embodiment.

At step S2104, the terminal 101 sends the channel information and/or the first information to a second network device 103.

In some embodiments, the second network device 103 receives the channel information and/or the first information mentioned above.

In some embodiments, the second network device 103 may be a terminal server, such as a terminal OTT server.

In some embodiments, the terminal 101 sends the channel information and the first information to the second network device 103.

In some embodiments, the terminal 101 sends the channel information to the second network device 103.

In some embodiments, the terminal 101 sends the first information to the second network device 103.

At step S2105, the second network device 103 determines a monitoring result of the at least one model pair.

In some embodiments, the second network device 103 determines the monitoring result based on the channel information and/or the first information.

At step S2106, the second network device 103 sends the monitoring result to the terminal 101.

In some embodiments, the terminal 101 receives the monitoring result.

In some embodiments, the monitoring results may include the monitoring results of all models in at least one model pair indicated by the first information, or the monitoring results of a portion of the models in at least one model pair.

In some embodiments, the second network device 103 may also send indication information (such as model ID, etc.) of at least one model pair corresponding to the monitoring results to the terminal 101, which can be used to determine the correspondence between the monitoring results of the at least one model pair and each model.

At step S2107, the terminal 101 sends the monitoring result to the first network device 102.

In some embodiments, the first network device 102 receives the monitoring result.

In some embodiments, the terminal 101 sends the monitoring result in a periodic manner.

In some embodiments, the terminal 101 sends the monitoring result in a semi-persistent manner.

In some embodiments, the terminal 101 sends the monitoring result in a non-periodic manner.

In some embodiments, the terminal 101 sends the monitoring result in an event triggered manner.

In some embodiments, the terminal 101 may also send indication information (such as model ID, etc.) of at least one model pair corresponding to the monitoring results to the first network device 102, which can be used to determine the correspondence between the monitoring results of the at least one model pair and each model.

In some embodiments, names of information are not limited to those specified in embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "codebook"', "codeword", "precoding matrix", etc. may be interchangeable with each other. For example, a codebook may be a collection of one or more codewords/precoding matrices.

In some embodiments, terms such as "up", "uplink", and "physical uplink" may be interchangeable with each other, terms such as "down", "downlink", and "physical downlink" may be interchangeable with each other, and terms such as "side", "sidelink", "side communication", "sidelink communication", "direct connection", "direct link", and "direct link communication" may be interchangeable with each other.

In some embodiments, terms such as "downlink control information (DCI)", "downlink (DL) assignment", "DL DCI", "uplink (UL) grant", "UL DCI", etc. may be interchangeable.

In some embodiments, terms such as "physical downlink shared channel (PDSCH)", "DL data", etc. may be used interchangeably; and terms such as "physical uplink shared channel (PUSCH)", "UL data", etc. may be used interchangeably.

In some embodiments, terms such as "radio", "wireless", "radio access network (RAN)", "access network (AN)", "RAN-based", etc. may be used interchangeably.

In some embodiments, terms such as "search space", "search space set", "search space configuration", "search space set configuration", "control resource set (CORESET)", and "CORESET configuration" may be interchangeable with each other.

In some embodiments, terms such as "synchronization signal (SS)", "synchronization signal block (SSB)", "reference signal (RS)", "pilot", and "pilot signal" may be interchangeable with each other.

In some embodiments, terms such as "moment", "time point", "time", "time position", etc. may be interchangeable with each other, and terms such as "duration", "time period", "time window", "window", "time", etc. may be interchangeable with each other.

In some embodiments, "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc. may be interchangeable with each other.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "transmit", "report", "deliver", "transmit", "bidirectional transmission", "send and/or receive", etc., may be used interchangeably.

In some embodiments, terms such as "certain", "predetermined", "preset", "set", "indicated", "a/an", "any", "first", etc. may be used interchangeably. "Certain A", "preetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., but is not limited thereto.

The communication method involved in embodiments of the present disclosure may include at least one of S2101 to S2107. For example, S2101 may be implemented as an independent embodiment, S2102+S2103 may be implemented as an independent embodiment, S2105+S2106 may be implemented as an independent embodiment, S2104+S2105+S2106 may be implemented as an independent embodiment, S2105+S2106+S2107 may be implemented as an independent embodiment, S2104+S2105+S2106+S2107 may be implemented as an independent embodiment, S2101+S2104+S2105+S2106 may be implemented as an independent embodiment, S2102+S2103+S2104+S2105+S2106 may be implemented as an independent embodiment, S2101+S2104+S2105+S2106+S2107 may be implemented as an independent embodiment, S2102+S2103+S2104+S2105+S2106+S2107 may be implemented as an independent embodiment, S2101+S2102+S2103+S2104+S2105+S2106+S2107 may be implemented as an independent embodiment, etc., but is not limited thereto.

In some embodiments, S2101 is optional, and may be omitted or replaced in different embodiments.

In some embodiments, S2102 and S2103 are optional, and one or more of these steps may be omitted or replaced in different embodiments.

In some embodiments, steps S2101 and S2102 may be executed in an alternate order or simultaneously.

In some embodiments, other alternative implementations described before or after the specification corresponding to FIG. 2A may be referred to.

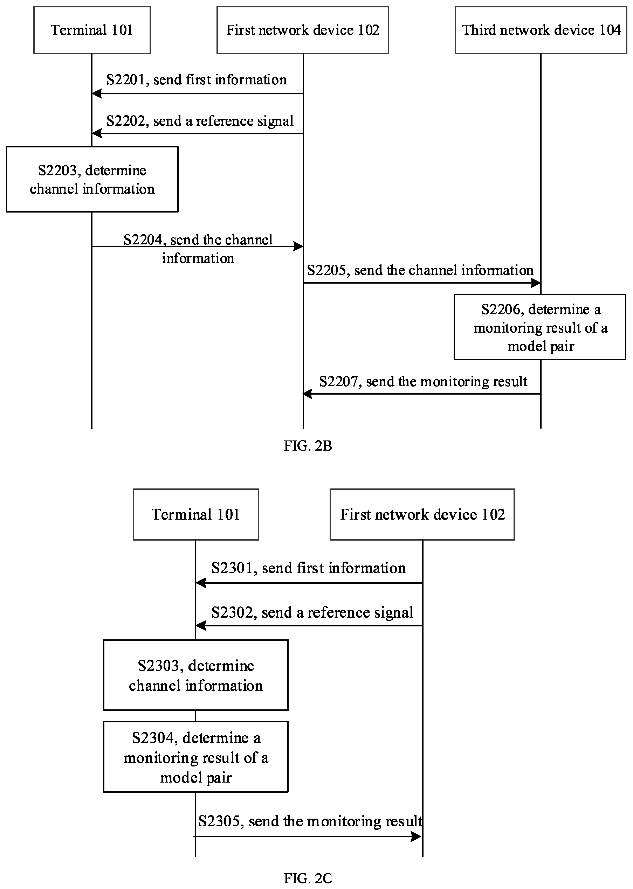

FIG. 2B is a schematic diagram illustrating interaction in a model monitoring method according to an embodiment of the present disclosure. As shown in FIG. 2B, this embodiment of the present disclosure relates to a model monitoring method. The method includes the following steps.

At step S2201, a first network device sends first information to a terminal 101.

In some embodiments, the terminal 101 receives the first information.

In some embodiments, the first information is configured for monitoring of at least one inactive model pair.

In some embodiments, the name of the first information is not limited and may include, for example, "indication information," "monitoring indication," "model monitoring indication," "inactive model monitoring indication," and the like.

In some embodiments, the first information is configured to indicate the terminal 101 to send channel information.

In some embodiments, the first information is included in at least one of: a Radio Resources Control (RRC) signaling; a Medium Access Control-Control Element (MAC-CE) signaling; or a Downlink Control Information (DCI) signaling.

In some embodiments, the model pair includes a terminal part model and a network part model.

In some embodiments, the at least one model pair indicated by the first information may include all the inactive models deployed on the terminal and network, or a portion of the inactive models.

In some embodiments, the monitoring of the at least one model pair includes monitoring of the terminal part model and/or the network part model in each model pair.

In some embodiments, the monitoring of at least one model pair includes the monitoring of the terminal part model and the network part model in each model pair.

In some embodiments, the monitoring of at least one model pair includes the monitoring of the terminal part model in each model pair.

In some embodiments, the monitoring of at least one model pair includes the monitoring of the network part model in each model pair.

In some embodiments, the first information includes at least one of: identification information of the at least one inactive model pair (e.g., model ID, etc.); a first threshold; or a format of the monitoring result.

The first threshold is configured to determine the monitoring result.

Optionally, the monitoring result may be in at least one of the following multiple formats:
one or more intermediate KPIs (e.g., SGCS, etc.) calculated;
one or more final KPIs (such as throughput, BLER, assumed BLER, NACK message, or ACK message, etc.) calculated;
whether to activate the corresponding model pair, which is determined based on the first threshold; or
performance evaluation determined based on the first threshold (e.g., whether the performance is good or poor, etc.).

Optionally, in some embodiments, the format of the monitoring result is based on whether the corresponding model pair is activated determined according to the first threshold, and if it is determined to not activate any of the at least one model pair, the monitoring result may be reverted to the traditional non-AI CSI feedback result.

In some embodiments, the format of the monitoring result may be configured by the network, specified by the protocol, or predefined through negotiation between the network and the terminal, which is not limited in this embodiment.

In some embodiments, the terminal 101 may send a first request to the first network device 102, wherein the first request is configured to request the first network device 102 to send the first information.

Optionally, the first request includes identification information for the at least one inactive model pair.

Optionally, the terminal 101 sends the first request using one of the following ways: periodically, semi-persistently, non-periodically, or event-triggered.

At step S2202, the first network device 102 sends a reference signal to the terminal 101.

In some embodiments, the terminal 101 receives the reference signal.

In some embodiments, the reference signal is a downlink pilot.

In some embodiments, the terminal 101 can measure the reference signal to obtain channel information.

At step S2203, the terminal 101 determines channel information.

In some embodiments, the terminal 101 determines the channel information based on the reference signal mentioned above.

In some embodiments, the terminal 101 can measure the reference signal to obtain the channel information.

Optionally, the channel information may be the original channel information estimated by the terminal 101, or the feature vector information determined after singular value decomposition calculation of the channel information by the terminal 101, which is not limited in this embodiment.

At step S2204, the terminal 101 sends the channel information to the first network device 102.

In some embodiments, the first network device 102 receives the channel information.

At step S2205, the first network device 102 sends the channel information to a third network device 104.

In some embodiments, the third network device 104 receives the channel information.

In some embodiments, the third network device 104 may be a network server.

At step S2206, the third network device 104 determines a monitoring result of the at least one model pair.

In some embodiments, the third network device 104 determines the monitoring results based on the channel information.

In some embodiments, the first network device 102 may send one of the following information to the third network device: identification information (such as model ID, etc.) of at least one inactive model pair; a first threshold; or a format of the monitoring result.

In some embodiments, the third network device 104 may determine the monitoring results based on the above information.

At step S2207, the third network device 104 sends the monitoring result to the first network device 102.

In some embodiments, the first network device 102 receives the monitoring result.

In some embodiments, the third network device 104 may also send indication information (such as model ID, etc.) of at least one model pair corresponding to the monitoring results to the first network device 102, which can be used to determine the correspondence between the monitoring results of the at least one model pair and each model.

In some embodiments, names of information are not limited to those specified in embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "codebook"', "codeword", "precoding matrix", etc. may be interchangeable with each other. For example, a codebook may be a collection of one or more codewords/precoding matrices.

In some embodiments, terms such as "up", "uplink", and "physical uplink" may be interchangeable with each other, terms such as "down", "downlink", and "physical downlink" may be interchangeable with each other, and terms such as "side", "sidelink", "side communication", "sidelink communication", "direct connection", "direct link", and "direct link communication" may be interchangeable with each other.

In some embodiments, terms such as "downlink control information (DCI)", "downlink (DL) assignment", "DL DCI", "uplink (UL) grant", "UL DCI", etc. may be interchangeable.

In some embodiments, terms such as "physical downlink shared channel (PDSCH)", "DL data", etc. may be used interchangeably; and terms such as "physical uplink shared channel (PUSCH)", "UL data", etc. may be used interchangeably.

In some embodiments, terms such as "radio", "wireless", "radio access network (RAN)", "access network (AN)", "RAN-based", etc. may be used interchangeably.

In some embodiments, terms such as "search space", "search space set", "search space configuration", "search space set configuration", "control resource set (CORESET)", and "CORESET configuration" may be interchangeable with each other.

In some embodiments, terms such as "synchronization signal (SS)", "synchronization signal block (SSB)", "reference signal (RS)", "pilot", and "pilot signal" may be interchangeable with each other.

In some embodiments, terms such as "moment", "time point", "time", "time position", etc. may be interchangeable with each other, and terms such as "duration", "time period", "time window", "window", "time", etc. may be interchangeable with each other.

In some embodiments, "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc. may be interchangeable with each other.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "transmit", "report", "deliver", "transmit", "bidirectional transmission", "send and/or receive", etc., may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., but is not limited thereto.

The communication method involved in embodiments of the present disclosure may include at least one of S2201 to S2207. For example, S2201 may be implemented as an independent embodiment, S2202+S2203 may be implemented as an independent embodiment, S2205+S2206 may be implemented as an independent embodiment, S2204+S2205+S2206 may be implemented as an independent embodiment, S2205+S2206+S2207 may be implemented as an independent embodiment, S2204+S2205+S2206+S2207 may be implemented as an independent embodiment, S2201+S2204+S2205+S2206 may be implemented as an independent embodiment, S2202+S2203+S2204+S2205+S2206 may be implemented as an independent embodiment, S2201+S2204+S2205+S2206+S2207 may be implemented as an independent embodiment, S2202+S2203+S2204+S2205+S2206+S2207 may be implemented as an independent embodiment, S2201+S2202+S2203+S2204+S2205+S2206+S2207 may be implemented as an independent embodiment, etc., but is not limited thereto.

In some embodiments, S2201 is optional, and may be omitted or replaced in different embodiments.

In some embodiments, S2202 and S2203 are optional, and one or more of these steps may be omitted or replaced in different embodiments.

In some embodiments, steps S2201 and S2202 may be executed in an alternate order or simultaneously.

In some embodiments, other alternative implementations described before or after the specification corresponding to FIG. 2B may be referred to.

FIG. 2C is a schematic diagram illustrating interaction in a model monitoring method according to an embodiment of the present disclosure. As shown in FIG. 2C, this embodiment of the present disclosure relates to a model monitoring method. The method includes the following steps.

At step S2301, a first network device 102 sends first information to a terminal 101.

In some embodiments, the terminal 101 receives the first information.

In some embodiments, the first information is configured for monitoring of at least one inactive model pair.

In some embodiments, the name of the first information is not limited and may include, for example, "indication information," "monitoring indication," "model monitoring indication," "inactive model monitoring indication," and the like.

In some embodiments, the first information is configured to indicate the terminal 101 to obtain a monitoring result of the at least one inactive model pair.

In some embodiments, the first information is included in at least one of: a Radio Resources Control (RRC) signaling; a Medium Access Control-Control Element (MAC-CE) signaling; or a Downlink Control Information (DCI) signaling.

In some embodiments, the model pair includes a terminal part model and a network part model.

In some embodiments, the at least one model pair indicated by the first information may include all the inactive models deployed on the terminal and network, or a portion of the inactive models.

In some embodiments, the monitoring of the at least one model pair includes monitoring of the terminal part model and/or the network part model in each model pair.

In some embodiments, the monitoring of at least one model pair includes the monitoring of the terminal part model and the network part model in each model pair.

In some embodiments, the monitoring of at least one model pair includes the monitoring of the terminal part model in each model pair.

In some embodiments, the monitoring of at least one model pair includes the monitoring of the network part model in each model pair.

In some embodiments, the first information includes at least one of: identification information of the at least one inactive model pair (e.g., model ID, etc.); a first threshold; or a format of the monitoring result.

The first threshold is configured to determine the monitoring result.

Optionally, the monitoring result may be in at least one of the following multiple formats:
one or more intermediate KPIs (e.g., SGCS, etc.) calculated;
one or more final KPIs (such as throughput, BLER, assumed BLER, NACK message, or ACK message, etc.) calculated;
whether to activate the corresponding model pair, which is determined based on the first threshold; or
performance evaluation determined based on the first threshold (e.g., whether the performance is good or poor, etc.).

Optionally, in some embodiments, the format of the monitoring result is based on whether the corresponding model pair is activated determined according to the first threshold, and if it is determined to not activate any of the at least one model pair, the monitoring result may be reverted to the traditional non-AI CSI feedback result.

In some embodiments, the format of the monitoring result may be configured by the network, specified by the protocol, or predefined through negotiation between the network and the terminal, which is not limited in this embodiment.

In some embodiments, the terminal 101 may send a first request to the first network device 102, wherein the first request is configured to request the first network device 102 to send the first information.

Optionally, the first request includes identification information for the at least one inactive model pair.

Optionally, the terminal 101 sends the first request using one of the following ways: periodically, semi-persistently, non-periodically, or event-triggered.

At step S2302, the first network device 102 sends a reference signal to the terminal 101.

In some embodiments, the terminal 101 receives the reference signal.

In some embodiments, the reference signal is a downlink pilot.

In some embodiments, the terminal 101 can measure the reference signal to obtain channel information.

At step S2303, the terminal 101 determines channel information.

In some embodiments, the terminal 101 determines the channel information based on the reference signal mentioned above.

In some embodiments, the terminal 101 can measure the reference signal to obtain the channel information.

Optionally, the channel information may be the original channel information estimated by the terminal 101, or the feature vector information determined after singular value decomposition calculation of the channel information by the terminal 101, which is not limited in this embodiment.

At step S2304, the terminal 101 determines a monitoring result of the at least one model pair.

In some embodiments, the terminal 101 determines the monitoring results based on the channel information and/or the first information mentioned above.

In some embodiments, the terminal 101 can activate the at least one model pair mentioned above, thereby obtaining the monitoring results of the at least one model pair.

In some embodiments, if the capability or current state of the terminal 101 does not support activating all of the at least one model pair at once, the terminal 101 may determine the model pairs that can be activated at once based on its own capability or current state, and repeat multiple times to complete the monitoring of the at least one model pair.

At step S2305, the terminal 101 sends the monitoring result to the first network device 102.

In some embodiments, the first network device 102 receives the monitoring result.

In some embodiments, the terminal 101 sends the monitoring result in a periodic manner.

In some embodiments, the terminal 101 sends the monitoring result in a semi-persistent manner.

In some embodiments, the terminal 101 sends the monitoring result in a non-periodic manner.

In some embodiments, the terminal 101 sends the monitoring result in an event triggered manner.

In some embodiments, the terminal 101 may also send indication information (such as model ID, etc.) of at least one model pair corresponding to the monitoring results to the first network device 102, which can be used to determine the correspondence between the monitoring results of the at least one model pair and each model.

In some embodiments, names of information are not limited to those specified in embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "codebook"', "codeword", "precoding matrix", etc. may be interchangeable with each other. For example, a codebook may be a collection of one or more codewords/precoding matrices.

In some embodiments, terms such as "up", "uplink", and "physical uplink" may be interchangeable with each other, terms such as "down", "downlink", and "physical downlink" may be interchangeable with each other, and terms such as "side", "sidelink", "side communication", "sidelink communication", "direct connection", "direct link", and "direct link communication" may be interchangeable with each other.

In some embodiments, terms such as "downlink control information (DCI)", "downlink (DL) assignment", "DL DCI", "uplink (UL) grant", "UL DCI", etc. may be interchangeable.

In some embodiments, terms such as "physical downlink shared channel (PDSCH)", "DL data", etc. may be used interchangeably; and terms such as "physical uplink shared channel (PUSCH)", "UL data", etc. may be used interchangeably.

In some embodiments, terms such as "radio", "wireless", "radio access network (RAN)", "access network (AN)", "RAN-based", etc. may be used interchangeably.

In some embodiments, terms such as "search space", "search space set", "search space configuration", "search space set configuration", "control resource set (CORESET)", and "CORESET configuration" may be interchangeable with each other.

In some embodiments, terms such as "synchronization signal (SS)", "synchronization signal block (SSB)", "reference signal (RS)", "pilot", and "pilot signal" may be interchangeable with each other.

In some embodiments, terms such as "moment", "time point", "time", "time position", etc. may be interchangeable with each other, and terms such as "duration", "time period", "time window", "window", "time", etc. may be interchangeable with each other.

In some embodiments, "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc. may be interchangeable with each other.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "transmit", "report", "deliver", "transmit", "bidirectional transmission", "send and/or receive", etc., may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., but is not limited thereto.

The communication method involved in embodiments of the present disclosure may include at least one of S2301 to S2305. For example, S2301 may be implemented as an independent embodiment, S2302+S2303 may be implemented as an independent embodiment, S2304 may be implemented as an independent embodiment, S2304+S2305 may be implemented as an independent embodiment, S2302+S2303+S2304 may be implemented as an independent embodiment, S2302+S2303+S2304+S2305 may be implemented as an independent embodiment, S2301+S2304 may be implemented as an independent embodiment, S2301+S2304+S2305 may be implemented as an independent embodiment, S2301+S2302+S2303+S2304+S2305 may be implemented as an independent embodiment, etc., but is not limited thereto.

In some embodiments, S2301 is optional, and may be omitted or replaced in different embodiments.

In some embodiments, S2302 and S2303 are optional, and one or more of these steps may be omitted or replaced in different embodiments.

In some embodiments, steps S2301 and S2302 may be executed in an alternate order or simultaneously.

In some embodiments, other alternative implementations described before or after the specification corresponding to FIG. 2C may be referred to.

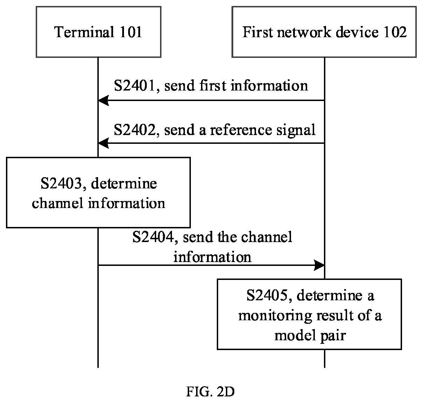

FIG. 2D is a schematic diagram illustrating interaction in a model monitoring method according to an embodiment of the present disclosure. As shown in FIG. 2D, this embodiment of the present disclosure relates to a model monitoring method. The method includes the following steps.

At step S2401, a first network device 102 sends first information to a terminal 101.

In some embodiments, the terminal 101 receives the first information.

In some embodiments, the first information is configured for monitoring of at least one inactive model pair.

In some embodiments, the name of the first information is not limited and may include, for example, "indication information," "monitoring indication," "model monitoring indication," "inactive model monitoring indication," and the like.

In some embodiments, the first information is configured to indicate the terminal 101 to send channel information.

In some embodiments, the first information is included in at least one of: a Radio Resources Control (RRC) signaling; a Medium Access Control-Control Element (MAC-CE) signaling; or a Downlink Control Information (DCI) signaling.

In some embodiments, the model pair includes a terminal part model and a network part model.

In some embodiments, the at least one model pair indicated by the first information may include all the inactive models deployed on the terminal and network, or a portion of the inactive models.

In some embodiments, the monitoring of the at least one model pair includes monitoring of the terminal part model and/or the network part model in each model pair.

In some embodiments, the monitoring of at least one model pair includes the monitoring of the terminal part model and the network part model in each model pair.

In some embodiments, the monitoring of at least one model pair includes the monitoring of the terminal part model in each model pair.

In some embodiments, the monitoring of at least one model pair includes the monitoring of the network part model in each model pair.

In some embodiments, the first information includes at least one of: identification information of the at least one inactive model pair (e.g., model ID, etc.); a first threshold; or a format of the monitoring result.

The first threshold is configured to determine the monitoring result.

Optionally, the monitoring result may be in at least one of the following multiple formats:
one or more intermediate KPIs (e.g., SGCS, etc.) calculated;
one or more final KPIs (such as throughput, BLER, assumed BLER, NACK message, or ACK message, etc.) calculated;
whether to activate the corresponding model pair, which is determined based on the first threshold; or
performance evaluation determined based on the first threshold (e.g., whether the performance is good or poor, etc.).

Optionally, in some embodiments, the format of the monitoring result is based on whether the corresponding model pair is activated determined according to the first threshold, and if it is determined to not activate any of the at least one model pair, the monitoring result may be reverted to the traditional non-AI CSI feedback result.

In some embodiments, the format of the monitoring result may be configured by the network, specified by the protocol, or predefined through negotiation between the network and the terminal, which is not limited in this embodiment.

In some embodiments, the terminal 101 may send a first request to the first network device 102, wherein the first request is configured to request the first network device 102 to send the first information.

Optionally, the first request includes identification information for the at least one inactive model pair.

Optionally, the terminal 101 sends the first request using one of the following ways: periodically, semi-persistently, non-periodically, or event-triggered.

At step S2402, the first network device 102 sends a reference signal to the terminal 101.

In some embodiments, the terminal 101 receives the reference signal.

In some embodiments, the reference signal is a downlink pilot.

In some embodiments, the terminal 101 can measure the reference signal to obtain channel information.

At step S2403, the terminal 101 determines channel information.

In some embodiments, the terminal 101 determines the channel information based on the reference signal mentioned above.

In some embodiments, the terminal 101 can measure the reference signal to obtain the channel information.

Optionally, the channel information may be the original channel information estimated by the terminal 101, or the feature vector information determined after singular value decomposition calculation of the channel information by the terminal 101, which is not limited in this embodiment.

At step S2404, the terminal 101 sends the channel information to the first network device 102.

In some embodiments, the first network device 102 receives the channel information.

At step S2405, the first network device 102 determines a monitoring result of the at least one model pair.

In some embodiments, the first network device 102 determines the monitoring result based on the channel information.

In some embodiments, names of information are not limited to those specified in embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "codebook"', "codeword", "precoding matrix", etc. may be interchangeable with each other. For example, a codebook may be a collection of one or more codewords/precoding matrices.

In some embodiments, terms such as "up", "uplink", and "physical uplink" may be interchangeable with each other, terms such as "down", "downlink", and "physical downlink" may be interchangeable with each other, and terms such as "side", "sidelink", "side communication", "sidelink communication", "direct connection", "direct link", and "direct link communication" may be interchangeable with each other.

In some embodiments, terms such as "downlink control information (DCI)", "downlink (DL) assignment", "DL DCI", "uplink (UL) grant", "UL DCI", etc. may be interchangeable.

In some embodiments, terms such as "physical downlink shared channel (PDSCH)", "DL data", etc. may be used interchangeably; and terms such as "physical uplink shared channel (PUSCH)", "UL data", etc. may be used interchangeably.

In some embodiments, terms such as "radio", "wireless", "radio access network (RAN)", "access network (AN)", "RAN-based", etc. may be used interchangeably.

In some embodiments, terms such as "search space", "search space set", "search space configuration", "search space set configuration", "control resource set (CORESET)", and "CORESET configuration" may be interchangeable with each other.

In some embodiments, terms such as "synchronization signal (SS)", "synchronization signal block (SSB)", "reference signal (RS)", "pilot", and "pilot signal" may be interchangeable with each other.

In some embodiments, terms such as "moment", "time point", "time", "time position", etc. may be interchangeable with each other, and terms such as "duration", "time period", "time window", "window", "time", etc. may be interchangeable with each other.

In some embodiments, "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc. may be interchangeable with each other.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "transmit", "report", "deliver", "transmit", "bidirectional transmission", "send and/or receive", etc., may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., but is not limited thereto.

The communication method involved in embodiments of the present disclosure may include at least one of S2401 to S2405. For example, S2401 may be implemented as an independent embodiment, S2402+S2403 may be implemented as an independent embodiment, S2405 may be implemented as an independent embodiment, S2404+S2405 may be implemented as an independent embodiment, S2401+S2402+S2403 may be implemented as an independent embodiment, S2402+S2403+S2404+S2405 may be implemented as an independent embodiment, S2401+S2404+S2405 may be implemented as an independent embodiment, S2401+S2402+S2403+S2404+S2405 may be implemented as an independent embodiment, etc., but is not limited thereto.

In some embodiments, S2401 is optional, and may be omitted or replaced in different embodiments.

In some embodiments, S2402 and S2403 are optional, and one or more of these steps may be omitted or replaced in different embodiments.

In some embodiments, steps S2401 and S2402 may be executed in an alternate order or simultaneously.

In some embodiments, other alternative implementations described before or after the specification corresponding to FIG. 2D may be referred to.

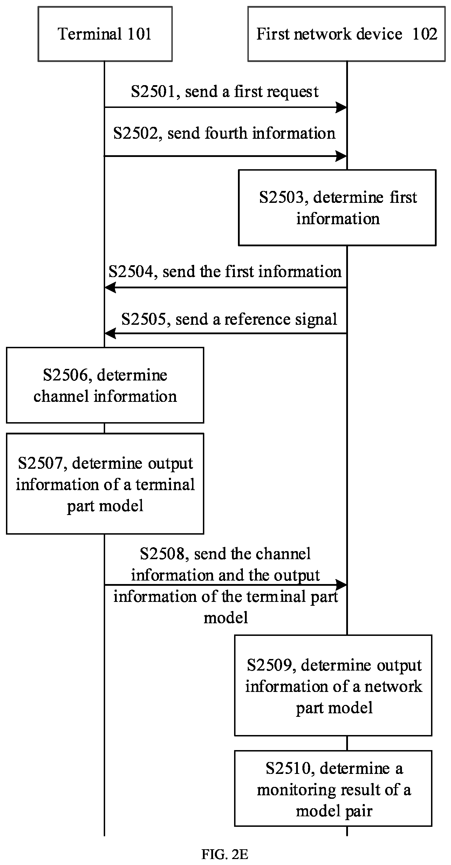

FIG. 2E is a schematic diagram illustrating interaction in a model monitoring method according to an embodiment of the present disclosure. As shown in FIG. 2E, this embodiment of the present disclosure relates to a model monitoring method. The method includes the following steps.

At step S2501, a terminal 101 sends a first request to a first network device 102.

In some embodiments, the first network device 102 receives the first request.

In some embodiments, the terminal 101 can send the first request to the first network device 102, which is used to request the first network device 102 to send first information.

In some embodiments, the name of the first information is not limited, and may be for example "monitoring request", "model monitoring request", "inactive model monitoring request", etc.

Optionally, the first request may include identification information of at least one inactive model pair requested to be activated.

Optionally, the terminal 101 sends the first request using one of the following ways: periodically, semi-persistently, non-periodically, or event triggered.

At step S2502, the terminal 101 sends fourth information to the first network device 102.

In some embodiments, the first network device 102 receives the fourth information.

In some embodiments, the fourth information is configured to indicate inactive models currently supported by the terminal 101.

In some embodiments, the name of the fourth information is not limited, and may be for example "capability information", "state information", "current state indication", etc.

In some embodiments, the fourth information may be configured to indicate a maximum number of models allowed to run simultaneously by the terminal 101 and a number of models currently running.

In some embodiments, the fourth information includes identification information of the inactive models currently supported by the terminal 101 (such as model ID or function ID, etc.).

At step S2503, the first network device 102 determines first information.

In some embodiments, the first network device 102 determines the first information based on the fourth information.

In some embodiments, the first information is configured for monitoring of at least one inactive model pair.

In some embodiments, the name of the first information is not limited and may include, for example, "indication information," "monitoring indication," "model monitoring indication," "inactive model monitoring indication," and the like.

In some embodiments, the first information is configured to indicate the terminal 101 to activate one or more of the at least one inactive model pair.

In some embodiments, the first network device 102 determines the number of activated model pairs indicated by the first information based on the fourth information.

In some embodiments, the model pair includes a terminal part model and a network part model.

In some embodiments, the at least one model pair indicated by the first information may include all the inactive models deployed on the terminal and network, or a portion of the inactive models.

In some embodiments, the monitoring of the at least one model pair includes monitoring of the terminal part model and/or the network part model in each model pair.

In some embodiments, the monitoring of at least one model pair includes the monitoring of the terminal part model and the network part model in each model pair.

In some embodiments, the monitoring of at least one model pair includes the monitoring of the terminal part model in each model pair.

In some embodiments, the monitoring of at least one model pair includes the monitoring of the network part model in each model pair.

In some embodiments, the first information includes at least one of: identification information of the at least one inactive model pair (e.g., model ID, etc.); a first threshold; or a format of the monitoring result.

The first threshold is configured to determine the monitoring result.

Optionally, the monitoring result may be in at least one of the following multiple formats:
one or more intermediate KPIs (e.g., SGCS, etc.) calculated;
one or more final KPIs (such as throughput, BLER, assumed BLER, NACK message, or ACK message, etc.) calculated;
whether to activate the corresponding model pair, which is determined based on the first threshold; or
performance evaluation determined based on the first threshold (e.g., whether the performance is good or poor, etc.).

Optionally, in some embodiments, the format of the monitoring result is based on whether the corresponding model pair is activated determined according to the first threshold, and if it is determined to not activate any of the at least one model pair, the monitoring result may be reverted to the traditional non-AI CSI feedback result.

In some embodiments, the format of the monitoring result may be configured by the network, specified by the protocol, or predefined through negotiation between the network and the terminal, which is not limited in this embodiment.

At step S2504, the first network device 102 sends the first information to the terminal 101.

In some embodiments, the terminal 101 receives the first information.

In some embodiments, the first information is sent multiple times.

In some embodiments, the first information sent each time indicates that a different model pair to be activated.

In some embodiments, the first information is included in at least one of: a Radio Resource Control (RRC) signaling; a Media Access Control- Control Element (MAC-CE) signaling; or a downward control information (DCI) signaling.

In some embodiments, the first network device 102 may also indicate the terminal 101 to activate all inactive model pairs through a single signaling.

At step S2505, the first network device 102 sends a reference signal to the terminal 101.

In some embodiments, the terminal 101 receives the reference signal.

In some embodiments, the reference signal is a downlink pilot.

In some embodiments, the terminal 101 can measure the reference signal to obtain channel information.

At step S2506, the terminal 101 determines channel information.

In some embodiments, the terminal 101 determines the channel information based on the reference signal mentioned above.

In some embodiments, the terminal 101 can measure the reference signal to obtain the channel information.

Optionally, the channel information may be the original channel information estimated by the terminal 101, or the feature vector information determined after singular value decomposition calculation of the channel information by the terminal 101, which is not limited in this embodiment.

At step S2507, the terminal 101 determines output information of an activated terminal part model.

In some embodiments, the terminal 101 inputs the channel information into one or more model pairs indicated by the first information, to obtain the output information of the terminal part models in the activated model pairs.

In some embodiments, the terminal 101 inputs the channel information into the terminal part models of one or more activated model pairs indicated by the first information to obtain the output information of the terminal part models in the activated model pairs.

At step S2508, the terminal 101 sends the channel information and the output information of the terminal part model to the first network device 102.

In some embodiments, the first network device 102 receives the channel information and the output information of the terminal part model.

In some embodiments, the input information for each activation model is the same, and it is possible to send only one model's input information (i.e. channel information).

In some embodiments, the terminal 101 sends output information of terminal part models of multiple model pairs to the first network device 102, and terminal 101 may also send third information to the first network device 102.

The third information is configured to determine the correspondence between the output information of the terminal part model and the model pair.

At step S2509, the first network device 102 determines output information of an activated network part model.

In some embodiments, the first network device 102 inputs the output information of the terminal part model into the one or more activated model pairs indicated by the first information to obtain the output information of the network part model in the activated model pair.

In some embodiments, the terminal 101 inputs the output information of the terminal part model to the network part model in the one or more activated model pairs indicated by the first information, to obtain the output information of the network part model in the activated model pair.

At step S2510, the first network device 102 determines a monitoring result of the at least one model pair.

In some embodiments, the first network device 102 determines the monitoring result based on the channel information and the output information of the network part model.

In some embodiments, the first network device 102 determines the monitoring result based on the channel information, the output information of the terminal part model, and the output information of the network part model.

In some embodiments, names of information are not limited to those specified in embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "codebook"', "codeword", "precoding matrix", etc. may be interchangeable with each other. For example, a codebook may be a collection of one or more codewords/precoding matrices.

In some embodiments, terms such as "up", "uplink", and "physical uplink" may be interchangeable with each other, terms such as "down", "downlink", and "physical downlink" may be interchangeable with each other, and terms such as "side", "sidelink", "side communication", "sidelink communication", "direct connection", "direct link", and "direct link communication" may be interchangeable with each other.

In some embodiments, terms such as "downlink control information (DCI)", "downlink (DL) assignment", "DL DCI", "uplink (UL) grant", "UL DCI", etc. may be interchangeable.

In some embodiments, terms such as "physical downlink shared channel (PDSCH)", "DL data", etc. may be used interchangeably; and terms such as "physical uplink shared channel (PUSCH)", "UL data", etc. may be used interchangeably.

In some embodiments, terms such as "radio", "wireless", "radio access network (RAN)", "access network (AN)", "RAN-based", etc. may be used interchangeably.

In some embodiments, terms such as "search space", "search space set", "search space configuration", "search space set configuration", "control resource set (CORESET)", and "CORESET configuration" may be interchangeable with each other.

In some embodiments, terms such as "synchronization signal (SS)", "synchronization signal block (SSB)", "reference signal (RS)", "pilot", and "pilot signal" may be interchangeable with each other.

In some embodiments, terms such as "moment", "time point", "time", "time position", etc. may be interchangeable with each other, and terms such as "duration", "time period", "time window", "window", "time", etc. may be interchangeable with each other.

In some embodiments, "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc. may be interchangeable with each other.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "transmit", "report", "deliver", "transmit", "bidirectional transmission", "send and/or receive", etc., may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., but is not limited thereto.

The communication method involved in embodiments of the present disclosure may include at least one of S2501 to S2510. For example, S2501 may be implemented as an independent embodiment, S2501+S2504 may be implemented as an independent embodiment, S2501+S2503+S2504 may be implemented as an independent embodiment, S2502+S2503+S2504 may be implemented as an independent embodiment, S2501+S2502+S2503+S2504 may be implemented as an independent embodiment, S2505+S2506 may be implemented as an independent embodiment, S2505+S2506+...+S2510 may be implemented as an independent embodiment, S2501+S2504+S2505+...+S2510 may be implemented as an independent embodiment, S2501+S2503+S2504+...+S2510 may be implemented as an independent embodiment, S2502+S2503+...+S2510 may be implemented as an independent embodiment, S2501+S2502+...+S2510 may be implemented as an independent embodiment, etc., but is not limited thereto.

In some embodiments, S2501 is optional, and may be omitted or replaced in different embodiments.

In some embodiments, S2502 is optional, and may be omitted or replaced in different embodiments.

In some embodiments, S2503 is optional, and may be omitted or replaced in different embodiments.

In some embodiments, steps S2501 and S2502 may be executed in an alternate order or simultaneously.

In some embodiments, steps S2504 and S2505 may be executed in an alternate order or simultaneously.

In some embodiments, other alternative implementations described before or after the specification corresponding to FIG. 2E may be referred to.

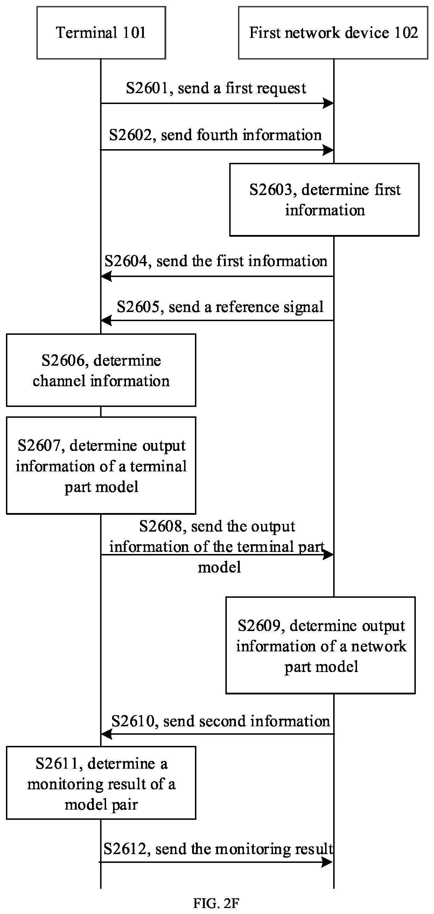

FIG. 2F is a schematic diagram illustrating interaction in a model monitoring method according to an embodiment of the present disclosure. As shown in FIG. 2F, this embodiment of the present disclosure relates to a model monitoring method. The method includes the following steps.

At step S2601, a terminal 101 sends a first request to a first network device 102.

In some embodiments, the first network device 102 receives the first request.

In some embodiments, the terminal 101 can send the first request to the first network device 102, which is used to request the first network device 102 to send first information.

In some embodiments, the name of the first information is not limited, and may be for example "monitoring request", "model monitoring request", "inactive model monitoring request", etc.

Optionally, the first request may include identification information of at least one inactive model pair requested to be activated.

Optionally, the terminal 101 sends the first request using one of the following ways: periodically, semi-persistently, non-periodically, or event triggered.

At step 2602, the terminal 101 sends fourth information to the first network device 102.

In some embodiments, the first network device 102 receives the fourth information.

In some embodiments, the fourth information is configured to indicate inactive models currently supported by the terminal 101.

In some embodiments, the name of the fourth information is not limited, and may be for example "capability information", "state information", "current state indication", etc.

In some embodiments, the fourth information may be configured to indicate a maximum number of models allowed to run simultaneously by the terminal 101 and a number of models currently running.

In some embodiments, the fourth information includes identification information of the inactive models currently supported by the terminal 101 (such as model ID or function ID, etc.).

At step 2603, the first network device 102 determines first information.

In some embodiments, the first network device 102 determines the first information based on the fourth information.

In some embodiments, the first information is configured for monitoring of at least one inactive model pair.

In some embodiments, the name of the first information is not limited and may include, for example, "indication information," "monitoring indication," "model monitoring indication," "inactive model monitoring indication," and the like.

In some embodiments, the first information is configured to indicate the terminal 101 to activate one or more of the at least one inactive model pair.

In some embodiments, the first network device 102 determines the number of activated model pairs indicated by the first information based on the fourth information.

In some embodiments, the model pair includes a terminal part model and a network part model.

In some embodiments, the at least one model pair indicated by the first information may include all the inactive models deployed on the terminal and network, or a portion of the inactive models.

In some embodiments, the monitoring of the at least one model pair includes monitoring of the terminal part model and/or the network part model in each model pair.

In some embodiments, the monitoring of at least one model pair includes the monitoring of the terminal part model and the network part model in each model pair.

In some embodiments, the monitoring of at least one model pair includes the monitoring of the terminal part model in each model pair.

In some embodiments, the monitoring of at least one model pair includes the monitoring of the network part model in each model pair.

In some embodiments, the first information includes at least one of: identification information of the at least one inactive model pair (e.g., model ID, etc.); a first threshold; or a format of the monitoring result.

The first threshold is configured to determine the monitoring result.

Optionally, the monitoring result may be in at least one of the following multiple formats:
one or more intermediate KPIs (e.g., SGCS, etc.) calculated;
one or more final KPIs (such as throughput, BLER, assumed BLER, NACK message, or ACK message, etc.) calculated;
whether to activate the corresponding model pair, which is determined based on the first threshold; or
performance evaluation determined based on the first threshold (e.g., whether the performance is good or poor, etc.).

Optionally, in some embodiments, the format of the monitoring result is based on whether the corresponding model pair is activated determined according to the first threshold, and if it is determined to not activate any of the at least one model pair, the monitoring result may be reverted to the traditional non-AI CSI feedback result.

In some embodiments, the format of the monitoring result may be configured by the network, specified by the protocol, or predefined through negotiation between the network and the terminal, which is not limited in this embodiment.

At step S2604, the first network device 102 sends the first information to the terminal 101.

In some embodiments, the terminal 101 receives the first information.

In some embodiments, the first information is sent multiple times.

In some embodiments, the first information sent each time indicates that a different model pair to be activated.

In some embodiments, the first information is included in at least one of: a Radio Resource Control (RRC) signaling; a Media Access Control- Control Element (MAC-CE) signaling; or a downward control information (DCI) signaling.

In some embodiments, the first network device 102 may also indicate the terminal 101 to activate all inactive model pairs through a single signaling.

At step S2605, the first network device 102 sends a reference signal to the terminal 101.

In some embodiments, the terminal 101 receives the reference signal.

In some embodiments, the reference signal is a downlink pilot.

In some embodiments, the terminal 101 can measure the reference signal to obtain channel information.

At step S2506, the terminal 101 determines channel information.

In some embodiments, the terminal 101 determines the channel information based on the reference signal mentioned above.

In some embodiments, the terminal 101 can measure the reference signal to obtain the channel information.

Optionally, the channel information may be the original channel information estimated by the terminal 101, or the feature vector information determined after singular value decomposition calculation of the channel information by the terminal 101, which is not limited in this embodiment.

At step S2607, the terminal 101 determines output information of an activated terminal part model.

In some embodiments, the terminal 101 inputs the channel information into one or more activated model pairs indicated by the first information, to obtain the output information of the terminal part models in the activated model pairs.

In some embodiments, the terminal 101 inputs the channel information into the terminal part models of one or more activated model pairs indicated by the first information to obtain the output information of the terminal part models in the activated model pairs.

At step S2608, the terminal 101 sends the output information of the terminal part model to the first network device 102.

In some embodiments, the first network device 102 receives the output information of the terminal part model.

In some embodiments, the terminal 101 sends the output information of the terminal part models of multiple model pairs to the first network device 102, and the terminal 101 may also send third information to the first network device 102.

The third information is configured to determine a correspondence between the output information of the terminal part model and the model pair.

At step S2609, the first network device determines output information of an activated network part model.

In some embodiments, the first network device 102 inputs the output information of the terminal part models into one or more activated model pairs indicated by the first information, to obtain the output information of the network part models in the activated model pairs.

In some embodiments, the terminal 101 inputs the output information of the terminal part models into the network part models of one or more activated model pairs indicated by the first information to obtain the output information of the network part models in the activated model pairs.

At step S2610, the first network device 102 sends second information to the terminal 101.

In some embodiments, the terminal 101 receives the second information.

In some embodiments, the second information is a channel status information-reference signal (CSI-RS) for beamforming.

A beam corresponding to the CSI-RS is determined based on the output information of the network part model.

In some embodiments, the second information is the output information of the network part model.

At step S2611, the terminal 101 determines a monitoring result of the at least one model pair.

In some embodiments, the terminal 101 determines the monitoring result based on the second information.

In some embodiments, the terminal 101 determines the monitoring result based on the channel information and the second information.

In some embodiments, the terminal 101 determines the monitoring result based on the channel information, the first information and the second information.

At step S2612, the terminal 101 sends the monitoring result to the first network device.

In some embodiments, the first network device 102 receives the monitoring result.

In some embodiments, the terminal 101 sends the monitoring result in a periodic manner.

In some embodiments, the terminal 101 sends the monitoring result in a semi-persistent manner.

In some embodiments, the terminal 101 sends the monitoring result in a non-periodic manner.

In some embodiments, the terminal 101 sends the monitoring result in an event triggered manner.

In some embodiments, the terminal 101 may also send indication information (such as model ID, etc.) of at least one model pair corresponding to the monitoring results to the first network device 102, which can be used to determine the correspondence between the monitoring results of the at least one model pair and each model.

In some embodiments, names of information are not limited to those specified in embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "codebook"', "codeword", "precoding matrix", etc. may be interchangeable with each other. For example, a codebook may be a collection of one or more codewords/precoding matrices.

In some embodiments, terms such as "up", "uplink", and "physical uplink" may be interchangeable with each other, terms such as "down", "downlink", and "physical downlink" may be interchangeable with each other, and terms such as "side", "sidelink", "side communication", "sidelink communication", "direct connection", "direct link", and "direct link communication" may be interchangeable with each other.

In some embodiments, terms such as "downlink control information (DCI)", "downlink (DL) assignment", "DL DCI", "uplink (UL) grant", "UL DCI", etc. may be interchangeable.

In some embodiments, terms such as "physical downlink shared channel (PDSCH)", "DL data", etc. may be used interchangeably; and terms such as "physical uplink shared channel (PUSCH)", "UL data", etc. may be used interchangeably.

In some embodiments, terms such as "radio", "wireless", "radio access network (RAN)", "access network (AN)", "RAN-based", etc. may be used interchangeably.

In some embodiments, terms such as "search space", "search space set", "search space configuration", "search space set configuration", "control resource set (CORESET)", and "CORESET configuration" may be interchangeable with each other.

In some embodiments, terms such as "synchronization signal (SS)", "synchronization signal block (SSB)", "reference signal (RS)", "pilot", and "pilot signal" may be interchangeable with each other.

In some embodiments, terms such as "moment", "time point", "time", "time position", etc. may be interchangeable with each other, and terms such as "duration", "time period", "time window", "window", "time", etc. may be interchangeable with each other.

In some embodiments, "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc. may be interchangeable with each other.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "transmit", "report", "deliver", "transmit", "bidirectional transmission", "send and/or receive", etc., may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., but is not limited thereto.

The communication method involved in embodiments of the present disclosure may include at least one of S2601 to S2612. For example, S2601 may be implemented as an independent embodiment, S2601+S2604 may be implemented as an independent embodiment, S2601+S2603+S2604 may be implemented as an independent embodiment, S2602+S2603+S2604 may be implemented as an independent embodiment, S2601+S2602+S2603+S2604 may be implemented as an independent embodiment, S2605+S2606 may be implemented as an independent embodiment, S2605+S2606+...+S2612 may be implemented as an independent embodiment, S2601+S2604+S2605+...+S2612 may be implemented as an independent embodiment, S2601+S2603+S2604+...+S2612 may be implemented as an independent embodiment, S2602+S2603+...+S2612 may be implemented as an independent embodiment, S2601+S2602+...+S2612 may be implemented as an independent embodiment, etc., but is not limited thereto.

In some embodiments, S2601 is optional, and may be omitted or replaced in different embodiments.

In some embodiments, S2602 is optional, and may be omitted or replaced in different embodiments.

In some embodiments, S2603 is optional, and may be omitted or replaced in different embodiments.

In some embodiments, steps S2601 and S2602 may be executed in an alternate order or simultaneously.

In some embodiments, steps S2604 and S2605 may be executed in an alternate order or simultaneously.

In some embodiments, other alternative implementations described before or after the specification corresponding to FIG. 2F may be referred to.

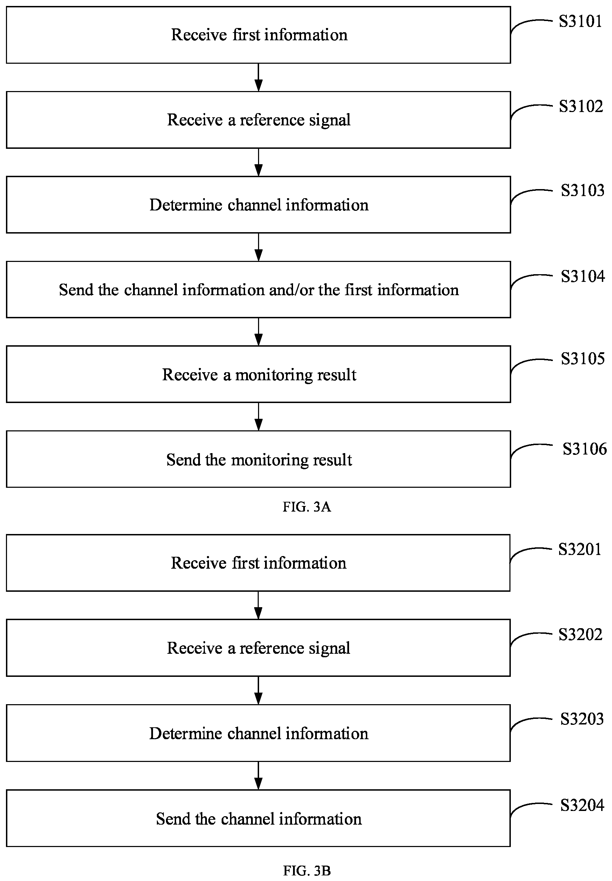

FIG. 3A is a schematic flowchart of a model monitoring method according to an embodiment of the present disclosure. As shown in FIG. 3A, this embodiment of the present disclosure relates to a model monitoring method performed by a terminal 101. The method includes the following steps.

At step S3101, first information is received.

For optional implementations of step S3101, reference can be made to optional implementations of step S2101 in FIG. 2A and other related parts in embodiments involved in FIG. 2A, which will not be repeated here.

At step S3102, a reference signal is received.

For optional implementations of step S3102, reference can be made to optional implementations of step S2102 in FIG. 2A and other related parts in embodiments involved in FIG. 2A, which will not be repeated here.

At step S3103, channel information is determined.

For optional implementations of step S3103, reference can be made to optional implementations of step S2103 in FIG. 2A and other related parts in embodiments involved in FIG. 2A, which will not be repeated here.

At step S3104, the channel information and/or the first information is sent.

For optional implementations of step S3104, reference can be made to optional implementations of step S2104 in FIG. 2A and other related parts in embodiments involved in FIG. 2A, which will not be repeated here.

In some embodiments, the channel information and/or the first information is configured for a first network device 102 to determine a monitoring result of at least one model pair. For optional implementations, reference can be made to optional implementations of step S2105 in FIG. 2A and other related parts in embodiments involved in FIG. 2A, which will not be repeated here.

At step S3105, a monitoring result is received.

For optional implementations of step S3105, reference can be made to optional implementations of step S2106 in FIG. 2A and other related parts in embodiments involved in FIG. 2A, which will not be repeated here.

At step S3106, the monitoring result is sent.

For optional implementations of step S3106, reference can be made to optional implementations of step S2107 in FIG. 2A and other related parts in embodiments involved in FIG. 2A, which will not be repeated here.

The communication method involved in embodiments of the present disclosure may include at least one of S3101 to S3106. For example, S3101 may be implemented as an independent embodiment, S3102+S3103 may be implemented as an independent embodiment, S3105 may be implemented as an independent embodiment, S3104+S3105 may be implemented as an independent embodiment, S3105+S3106 may be implemented as an independent embodiment, S3104+S3105+S3106 may be implemented as an independent embodiment, S3101+S3104+S3105+S3106 may be implemented as an independent embodiment, S3102+S3103+S3104+S3105+S3106 may be implemented as an independent embodiment, S3101+ S3102+S3103+S3104+S3105+S3106 may be implemented as an independent embodiment, etc., but is not limited thereto.

In some embodiments, S3101 is optional, and may be omitted or replaced in different embodiments.

In some embodiments, S3102 and S3103 are optional, and one or more of these steps may be omitted or replaced in different embodiments.

In some embodiments, steps S3101 and S3102 may be executed in an alternate order or simultaneously.

FIG. 3B is a schematic flowchart of a model monitoring method according to an embodiment of the present disclosure. As shown in FIG. 3B, this embodiment of the present disclosure relates to a model monitoring method performed by a terminal 101. The method includes the following steps.

At step S3201, first information is received.

For optional implementations of step S3201, reference can be made to optional implementations of step S2201 in FIG. 2B and step S2401 in FIG. 2D and other related parts in embodiments involved in FIG. 2B and FIG. 2D, which will not be repeated here.

At step S3202, a reference signal is received.

For optional implementations of step S3202, reference can be made to optional implementations of step S2202 in FIG. 2B and step S2402 in FIG. 2D and other related parts in embodiments involved in FIG. 2B and FIG. 2D, which will not be repeated here.

At step S3203, channel information is determined.

For optional implementations of step S3203, reference can be made to optional implementations of step S2203 in FIG. 2B and step S2403 in FIG. 2D and other related parts in embodiments involved in FIG. 2B and FIG. 2D, which will not be repeated here.

At step S3204, the channel information is sent.

For optional implementations of step S3204, reference can be made to optional implementations of step S2204 in FIG. 2B and step S2404 in FIG. 2D and other related parts in embodiments involved in FIG. 2B and FIG. 2D, which will not be repeated here.

In some embodiments, the channel information is configured for a first network device 102 to send the channel information to a third network device 103. For optional implementations, reference can be made to optional implementations of step S2205 in FIG. 2B and other related parts in embodiments involved in FIG. 2B, which will not be repeated here.

In some embodiments, the channel information is configured for the third network device 103 to determine a monitoring result of at least one model pair. For optional implementations, reference can be made to optional implementations of step S2206 in FIG. 2B and other related parts in embodiments involved in FIG. 2B, which will not be repeated here.

In some embodiments, the channel information is configured for the first network device 102 to determine a monitoring result of at least one model pair. For optional implementations, reference can be made to optional implementations of step S2405 in FIG. 2D and other related parts in embodiments involved in FIG. 2D, which will not be repeated here.

The communication method involved in embodiments of the present disclosure may include at least one of S3201 to S3204. For example, S3201 may be implemented as an independent embodiment, S3202+S3203 may be implemented as an independent embodiment, S3202+S3203+S3204 may be implemented as an independent embodiment, S3201+S3202+S3203+S3204 may be implemented as an independent embodiment, etc., but is not limited thereto.

In some embodiments, S3201 is optional, and may be omitted or replaced in different embodiments.

In some embodiments, S3202 and S3203 are optional, and one or more of these steps may be omitted or replaced in different embodiments.

In some embodiments, steps S3201 and S3202 may be executed in an alternate order or simultaneously.

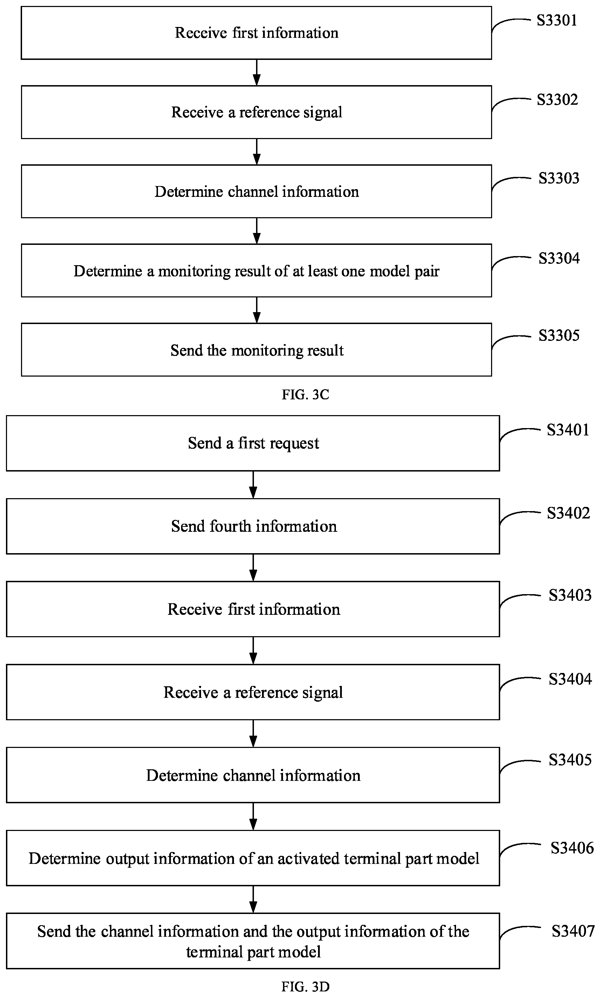

FIG. 3C is a schematic flowchart of a model monitoring method according to an embodiment of the present disclosure. As shown in FIG. 3C, this embodiment of the present disclosure relates to a model monitoring method performed by a terminal 101. The method includes the following steps.

At step S3301, first information is received.

For optional implementations of step S3301, reference can be made to optional implementations of step S2301 in FIG. 2C and other related parts in embodiments involved in FIG. 2C, which will not be repeated here.

At step S3302, a reference signal is received.

For optional implementations of step S3302, reference can be made to optional implementations of step S2302 in FIG. 2C and other related parts in embodiments involved in FIG. 2C, which will not be repeated here.

At step S3303, channel information is determined.

For optional implementations of step S3303, reference can be made to optional implementations of step S2303 in FIG. 2C and other related parts in embodiments involved in FIG. 2C, which will not be repeated here.

At step S3304, a monitoring result of at least one model pair is determined.

For optional implementations of step S3304, reference can be made to optional implementations of step S2304 in FIG. 2C and other related parts in embodiments involved in FIG. 2C, which will not be repeated here.

At step S3305, the monitoring result is sent.

For optional implementations of step S3305, reference can be made to optional implementations of step S2305 in FIG. 2C and other related parts in embodiments involved in FIG. 2C, which will not be repeated here.

The communication method involved in embodiments of the present disclosure may include at least one of S3301 to S3305. For example, S3301 may be implemented as an independent embodiment, S3302+S3303 may be implemented as an independent embodiment, S3305 may be implemented as an independent embodiment, S3302+S3303+S3304 may be implemented as an independent embodiment, S3302+S3303+S3304+S3305 may be implemented as an independent embodiment, S3301+S3302+S3303+S3304 may be implemented as an independent embodiment, S3301+S3302+S3303+S3304+S3305 may be implemented as an independent embodiment, etc., but is not limited thereto.

In some embodiments, S3301 is optional, and may be omitted or replaced in different embodiments.

In some embodiments, S3302 and S3303 are optional, and one or more of these steps may be omitted or replaced in different embodiments.

In some embodiments, steps S3301 and S3302 may be executed in an alternate order or simultaneously.

FIG. 3D is a schematic flowchart of a model monitoring method according to an embodiment of the present disclosure. As shown in FIG. 3D, this embodiment of the present disclosure relates to a model monitoring method performed by a terminal 101. The method includes the following steps.

At step S3401, a first request is sent.

For optional implementations of step S3401, reference can be made to optional implementations of step S2501 in FIG. 2E and other related parts in embodiments involved in FIG. 2E, which will not be repeated here.

At step S3402, fourth information is sent.

For optional implementations of step S3402, reference can be made to optional implementations of step S2502 in FIG. 2E and other related parts in embodiments involved in FIG. 2E, which will not be repeated here.

In some embodiments, the fourth information is configured for a first network device 102 to determine first information. For optional implementations, reference can be made to optional implementations of step S2503 in FIG. 2E and other related parts in embodiments involved in FIG. 2E, which will not be repeated here.

At step S3403, first information is received.

For optional implementations of step S3403, reference can be made to optional implementations of step S2504 in FIG. 2E and other related parts in embodiments involved in FIG. 2E, which will not be repeated here.

At step S3404, a reference signal is received.

For optional implementations of step S3404, reference can be made to optional implementations of step S2505 in FIG. 2E and other related parts in embodiments involved in FIG. 2E, which will not be repeated here.

At step S3405, channel information is determined.

For optional implementations of step S3405, reference can be made to optional implementations of step S2506 in FIG. 2E and other related parts in embodiments involved in FIG. 2E, which will not be repeated here.

At step S3406, output information of an activated terminal part model is determined.

For optional implementations of step S3406, reference can be made to optional implementations of step S2507 in FIG. 2E and other related parts in embodiments involved in FIG. 2E, which will not be repeated here.

At step S3407, the channel information and the output information of the activated terminal part model are sent.

For optional implementations of step S3407, reference can be made to optional implementations of step S2508 in FIG. 2E and other related parts in embodiments involved in FIG. 2E, which will not be repeated here.

In some embodiments, the channel information and the output information of the terminal part model are configured for the first network device 102 to determine output information of a network part model in at least one model pair. For optional implementations, reference can be made to optional implementations of step S2509 in FIG. 2E and other related parts in embodiments involved in FIG. 2E, which will not be repeated here.

In some embodiments, the channel information and the output information of the network part model are configured for the first network device 102 to determine a monitoring result of the at least one model pair. For optional implementations, reference can be made to optional implementations of step S2510 in FIG. 2E and other related parts in embodiments involved in FIG. 2E, which will not be repeated here.

The communication method involved in embodiments of the present disclosure may include at least one of S3401 to S3407. For example, S3401 may be implemented as an independent embodiment, S3401+S3403 may be implemented as an independent embodiment, S3402+S3403 may be implemented as an independent embodiment, S3401+S3402+S3403 may be implemented as an independent embodiment, S3404+S3405 may be implemented as an independent embodiment, S3404+S3405+S3406+S3407 may be implemented as an independent embodiment, S3401+S3403+S3404+S3405+S3406+S3407 may be implemented as an independent embodiment, S3401+S3403+S3404+...+S3407 may be implemented as an independent embodiment, S3401+S3402+...+S3407 may be implemented as an independent embodiment, etc., but is not limited thereto.

In some embodiments, S3401 is optional, and may be omitted or replaced in different embodiments.

In some embodiments, S3402 is optional, and may be omitted or replaced in different embodiments.

In some embodiments, S3403 is optional, and may be omitted or replaced in different embodiments.

In some embodiments, steps S3401 and S3402 may be executed in an alternate order or simultaneously.

In some embodiments, steps S3403 and S3404 may be executed in an alternate order or simultaneously.

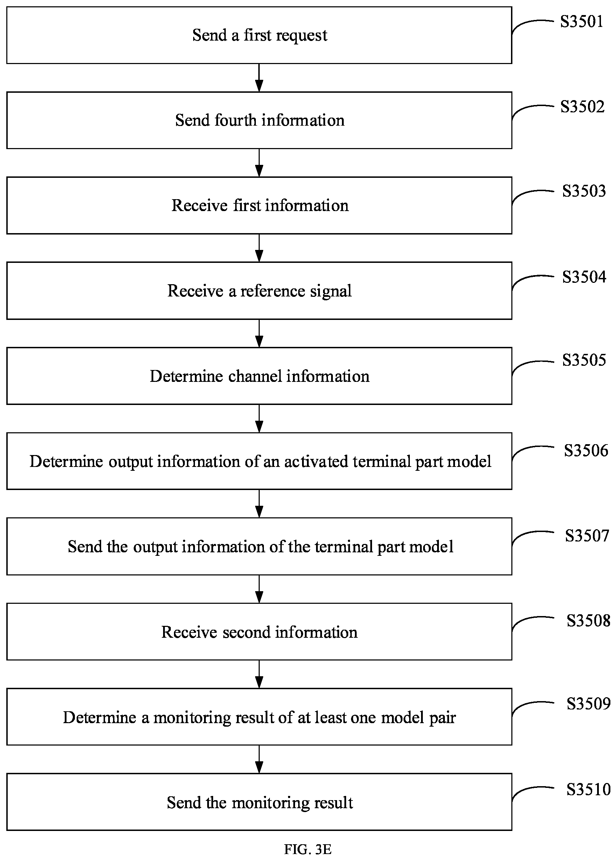

FIG. 3E is a schematic flowchart of a model monitoring method according to an embodiment of the present disclosure. As shown in FIG. 3E, this embodiment of the present disclosure relates to a model monitoring method performed by a terminal 101. The method includes the following steps.

At step S3501, a first request is sent.

For optional implementations of step S3501, reference can be made to optional implementations of step S2601 in FIG. 2F and other related parts in embodiments involved in FIG. 2F, which will not be repeated here.

At step S3502, fourth information is sent.

For optional implementations of step S3502, reference can be made to optional implementations of step S2602 in FIG. 2F and other related parts in embodiments involved in FIG. 2F, which will not be repeated here.

In some embodiments, the fourth information is configured for a first network device 102 to determine first information. For optional implementations, reference can be made to optional implementations of step S2603 in FIG. 2F and other related parts in embodiments involved in FIG. 2F, which will not be repeated here.

At step S3503, first information is received.

For optional implementations of step S3503, reference can be made to optional implementations of step S2604 in FIG. 2F and other related parts in embodiments involved in FIG. 2F, which will not be repeated here.

At step S3504, a reference signal is received.

For optional implementations of step S3504, reference can be made to optional implementations of step S2605 in FIG. 2F and other related parts in embodiments involved in FIG. 2F, which will not be repeated here.

At step S3505, channel information is determined.

For optional implementations of step S3505, reference can be made to optional implementations of step S2606 in FIG. 2F and other related parts in embodiments involved in FIG. 2F, which will not be repeated here.

At step S3506, output information of an activated terminal part model is determined.

For optional implementations of step S3506, reference can be made to optional implementations of step S2607 in FIG. 2F and other related parts in embodiments involved in FIG. 2F, which will not be repeated here.

At step S3507, the output information of the terminal part model is sent.

For optional implementations of step S3507, reference can be made to optional implementations of step S2608 in FIG. 2F and other related parts in embodiments involved in FIG. 2F, which will not be repeated here.

In some embodiments, the output information of the terminal part model is configured for the first network device 102 to determine output information of a network part model in at least one model pair. For optional implementations, reference can be made to optional implementations of step S2609 in FIG. 2F and other related parts in embodiments involved in FIG. 2F, which will not be repeated here.

At step S3508, second information is received.

For optional implementations of step S3508, reference can be made to optional implementations of step S2610 in FIG. 2F and other related parts in embodiments involved in FIG. 2F, which will not be repeated here.

At step S3509, a monitoring result of at least one model pair is determined.

For optional implementations of step S3509, reference can be made to optional implementations of step S2611 in FIG. 2F and other related parts in embodiments involved in FIG. 2F, which will not be repeated here.

At step S3510, the monitoring result is sent.

For optional implementations of step S3510, reference can be made to optional implementations of step S2612 in FIG. 2F and other related parts in embodiments involved in FIG. 2F, which will not be repeated here.

The communication method involved in embodiments of the present disclosure may include at least one of S3501 to S3510. For example, S3501 may be implemented as an independent embodiment, S3501+S3503 may be implemented as an independent embodiment, S3501+S3502+S3503 may be implemented as an independent embodiment, S3502+S3503 may be implemented as an independent embodiment, S3501+S3502+S3503+S3504 may be implemented as an independent embodiment, S3504+S3505 may be implemented as an independent embodiment, S3505+S3506+...+S3510 may be implemented as an independent embodiment, S3501+S3503+S3504+...+S3510 may be implemented as an independent embodiment, S3503+S3504+...+S3510 may be implemented as an independent embodiment, S3501+S3502+...+S3510 may be implemented as an independent embodiment, etc., but is not limited thereto.

In some embodiments, S3501 is optional, and may be omitted or replaced in different embodiments.

In some embodiments, S3502 is optional, and may be omitted or replaced in different embodiments.

In some embodiments, S3503 is optional, and may be omitted or replaced in different embodiments.

In some embodiments, steps S3501 and S3502 may be executed in an alternate order or simultaneously.

In some embodiments, steps S3503 and S3504 may be executed in an alternate order or simultaneously.

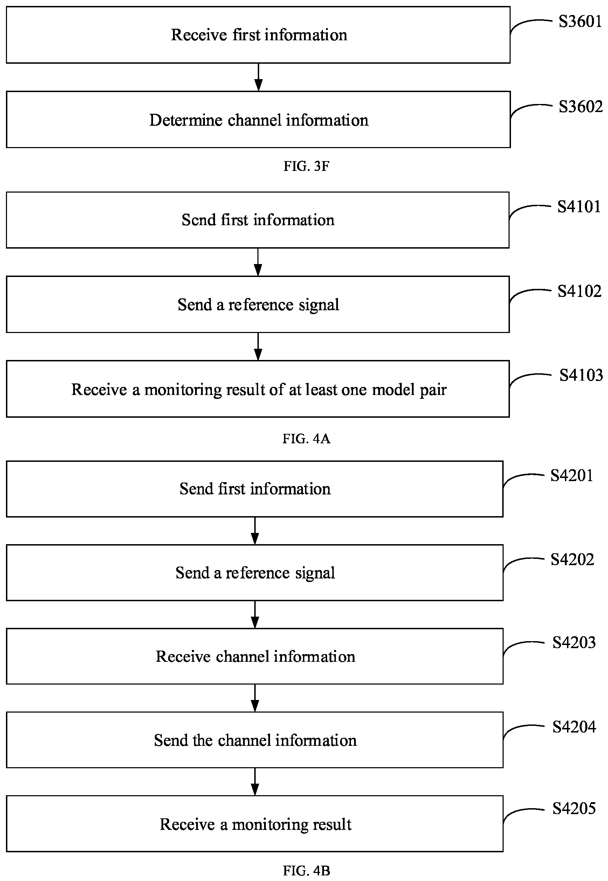

FIG. 3F is a schematic flowchart of a model monitoring method according to an embodiment of the present disclosure. As shown in FIG. 3F, this embodiment of the present disclosure relates to a model monitoring method performed by a terminal 101. The method includes the following steps.

At step S3601, first information is received.

For optional implementations of step S3601, reference can be made to optional implementations of step S2101 in FIG. 2A, step S2201 in FIG. 2B, step S2301 in FIG. 2C, step S2401 in FIG. 2D, step S2504 in FIG. 2E, step S2604 in FIG. 2F, step S3101 in FIG. 3A, step S3201 in FIG. 3B, step S3301 in FIG. 3C, step S3403 in FIG. 3D, and step S3503 in FIG. 3E and other related parts in embodiments involved in FIG. 2A-FIG. 2F and FIG. 3A-FIG. 3E, which will not be repeated here.

At step S3602, channel information is determined.

For optional implementations of step S3602, reference can be made to optional implementations of step S2103 in FIG. 2A, step S2203 in FIG. 2B, step S2303 in FIG. 2C, step S2403 in FIG. 2D, step S2506 in FIG. 2E, step S2606 in FIG. 2F, step S3103 in FIG. 3A, step S3203 in FIG. 3B, step S3303 in FIG. 3C, step S3405 in FIG. 3D, and step S3505 in FIG. 3E and other related parts in embodiments involved in FIG. 2A-FIG. 2F and FIG. 3A-FIG. 3E, which will not be repeated here.

The communication method involved in embodiments of the present disclosure may include at least one of S3601 to S3602. For example, S3601 may be implemented as an independent embodiment, S3602 may be implemented as an independent embodiment, S3601+S3602 may be implemented as an independent embodiment, etc., but is not limited thereto.

In some embodiments, steps S3601 and S3602 may be executed in an alternate order or simultaneously.

FIG. 4A is a schematic flowchart of a model monitoring method according to an embodiment of the present disclosure. As shown in FIG. 4A, this embodiment of the present disclosure relates to a model monitoring method performed by a first network device 102. The method includes the following steps.

At step S4101, first information is sent.

For optional implementations of step S4101, reference can be made to optional implementations of step S2101 in FIG. 2A and step S2301 in FIG. 2C and other related parts in embodiments involved in FIG. 2A and FIG. 2C, which will not be repeated here.

In some embodiments, the first information is configured for a terminal 101 to send the first information.

At step S4102, a reference signal is received.

For optional implementations of step S4102, reference can be made to optional implementations of step S2102 in FIG. 2A and step S2302 in FIG. 2C and other related parts in embodiments involved in FIG. 2A and FIG. 2C, which will not be repeated here.

In some embodiments, the reference signal is configured for the terminal 101 to determine channel information. For optional implementations, reference can be made to optional implementations of step S2103 in FIG. 2A and step S2303 in FIG. 2C and other related parts in embodiments involved in FIG. 2A and FIG. 2C, which will not be repeated here.

In some embodiments, the channel information and/or the first information are sent by the terminal 101 to a second network device 103. For optional implementations, reference can be made to optional implementations of step S2104 in FIG. 2A and other related parts in embodiments involved in FIG. 2A, which will not be repeated here.

In some embodiments, the channel information and/or the first information are configured for the second network device 103 to determine a monitoring result of at least one model pair. For optional implementations, reference can be made to optional implementations of step S2105 in FIG. 2A and other related parts in embodiments involved in FIG. 2A, which will not be repeated here.

In some embodiments, the monitoring result of at least one model pair is sent by the second network device 103 to the terminal 101. For optional implementations, reference can be made to optional implementations of step S2106 in FIG. 2A and other related parts in embodiments involved in FIG. 2A, which will not be repeated here.

In some embodiments, the channel information is configured to determine the monitoring result of at least one model pair. For optional implementations, reference can be made to optional implementations of step S2304 in FIG. 2C and other related parts in embodiments involved in FIG. 2C, which will not be repeated here.

At step S4103, a monitoring result of at least one model pair is received.

For optional implementations of step S4103, reference can be made to optional implementations of step S2107 in FIG. 2A and step S2305 in FIG. 2C and other related parts in embodiments involved in FIG. 2A and FIG. 2C, which will not be repeated here.

In some embodiments, the channel information is configured for the first network device 102 to determine the monitoring result of at least one model pair. For optional implementations, reference can be made to optional implementations of step S2305 in FIG. 2C and other related parts in embodiments involved in FIG. 2C, which will not be repeated here.

The communication method involved in embodiments of the present disclosure may include at least one of S4101 to S4103. For example, S4101 may be implemented as an independent embodiment, S4102 may be implemented as an independent embodiment, S4103 may be implemented as an independent embodiment, S4101+S4103 may be implemented as an independent embodiment, S4101+S4102+S4103 may be implemented as an independent embodiment, etc., but is not limited thereto.

In some embodiments, S4101 is optional, and may be omitted or replaced in different embodiments.

In some embodiments, S4102 is optional, and may be omitted or replaced in different embodiments.

In some embodiments, steps S4101 and S4102 may be executed in an alternate order or simultaneously.

FIG. 4B is a schematic flowchart of a model monitoring method according to an embodiment of the present disclosure. As shown in FIG. 4B, this embodiment of the present disclosure relates to a model monitoring method performed by a first network device 102. The method includes the following steps.

At step S4201, first information is sent.

For optional implementations of step S4201, reference can be made to optional implementations of step S2201 in FIG. 2B and other related parts in embodiments involved in FIG. 2B, which will not be repeated here.

At step S4202, a reference signal is received.

For optional implementations of step S4202, reference can be made to optional implementations of step S2202 in FIG. 2B and other related parts in embodiments involved in FIG. 2B, which will not be repeated here.

In some embodiments, the reference signal is configured for a terminal 101 to determine channel information. For optional implementations, reference can be made to optional implementations of step S2203 in FIG. 2B and other related parts in embodiments involved in FIG. 2B, which will not be repeated here.

At step S4203, channel information is received.

For optional implementations of step S4203, reference can be made to optional implementations of step S2204 in FIG. 2B and other related parts in embodiments involved in FIG. 2B, which will not be repeated here.

At step S4204, the channel information is sent.

For optional implementations of step S4204, reference can be made to optional implementations of step S2205 in FIG. 2B and other related parts in embodiments involved in FIG. 2B, which will not be repeated here.

In some embodiments, the channel information is configured for a third network device 104 to determine a monitoring result of at least one model pair. For optional implementations, reference can be made to optional implementations of step S2206 in FIG. 2B and other related parts in embodiments involved in FIG. 2B, which will not be repeated here.

At step S4205, a monitoring result is received.

For optional implementations of step S4205, reference can be made to optional implementations of step S2207 in FIG. 2B and other related parts in embodiments involved in FIG. 2B, which will not be repeated here.

The communication method involved in embodiments of the present disclosure may include at least one of S4201 to S4205. For example, S4201 may be implemented as an independent embodiment, S4202+S4203 may be implemented as an independent embodiment, S4204+S4205 may be implemented as an independent embodiment, S4203+S4204+S4205 may be implemented as an independent embodiment, S4201+S4203+S4204+S4205 may be implemented as an independent embodiment, S4202+S4203+S4204+S4205 may be implemented as an independent embodiment, S4202+S4203+S4204+S4205+S4206 may be implemented as an independent embodiment, S4201+S4202+S4203+S4204+S4205 may be implemented as an independent embodiment, etc., but is not limited thereto.

In some embodiments, S4201 is optional, and may be omitted or replaced in different embodiments.

In some embodiments, steps S4201 and S4202 may be executed in an alternate order or simultaneously.

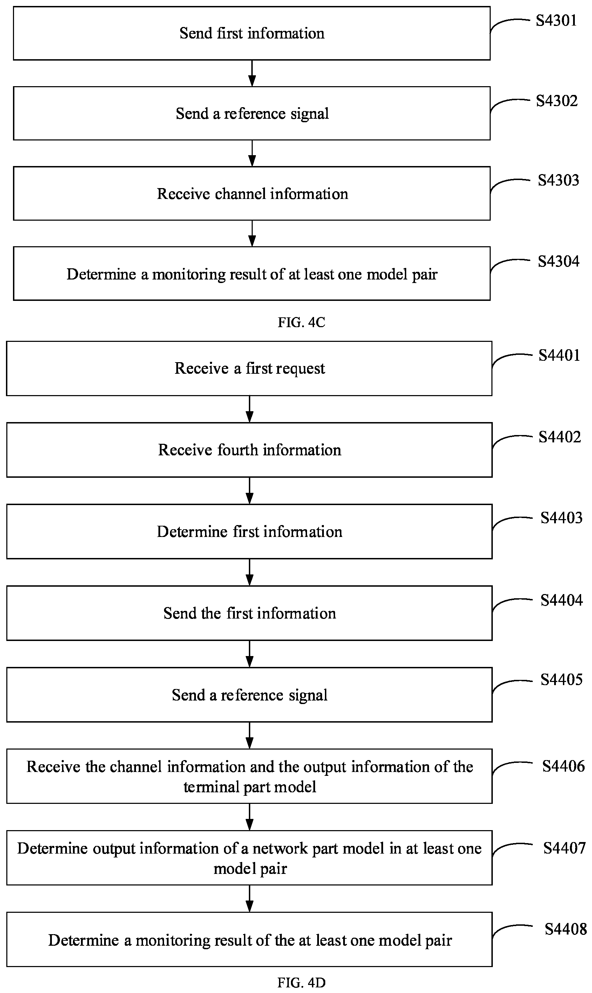

FIG. 4C is a schematic flowchart of a model monitoring method according to an embodiment of the present disclosure. As shown in FIG. 4C, this embodiment of the present disclosure relates to a model monitoring method performed by a first network device 102. The method includes the following steps.

At step S4301, first information is sent.

For optional implementations of step S4301, reference can be made to optional implementations of step S2401 in FIG. 2D and other related parts in embodiments involved in FIG. 2D, which will not be repeated here.

At step S4302, a reference signal is received.

For optional implementations of step S4302, reference can be made to optional implementations of step S2402 in FIG. 2D and other related parts in embodiments involved in FIG. 2D, which will not be repeated here.

In some embodiments, the reference signal is configured for a terminal 101 to determine channel information. For optional implementations, reference can be made to optional implementations of step S2403 in FIG. 2D and other related parts in embodiments involved in FIG. 2D, which will not be repeated here.

At step S4303, channel information is received.

For optional implementations of step S4303, reference can be made to optional implementations of step S2404 in FIG. 2D and other related parts in embodiments involved in FIG. 2D, which will not be repeated here.

At step S4304, a monitoring result of at least one model pair is determined.

For optional implementations of step S4304, reference can be made to optional implementations of step S2405 in FIG. 2D and other related parts in embodiments involved in FIG. 2D, which will not be repeated here.

The communication method involved in embodiments of the present disclosure may include at least one of S4301 to S4304. For example, S4301 may be implemented as an independent embodiment, S4302+S4303 may be implemented as an independent embodiment, S4304 may be implemented as an independent embodiment, S4301+S4303+S4304 may be implemented as an independent embodiment, S4302+S4303+S4304 may be implemented as an independent embodiment, S4301+S4302+S4303+S4304 may be implemented as an independent embodiment, etc., but is not limited thereto.

In some embodiments, S4301 is optional, and may be omitted or replaced in different embodiments.

In some embodiments, S4302 and S4303 are optional, and one or more of these steps may be omitted or replaced in different embodiments.

In some embodiments, steps S4301 and S4302 may be executed in an alternate order or simultaneously.

FIG. 4D is a schematic flowchart of a model monitoring method according to an embodiment of the present disclosure. As shown in FIG. 4D, this embodiment of the present disclosure relates to a model monitoring method performed by a first network device 102. The method includes the following steps.

At step S4401, a first request is received.

For optional implementations of step S4401, reference can be made to optional implementations of step S2501 in FIG. 2E and other related parts in embodiments involved in FIG. 2E, which will not be repeated here.

At step S4402, fourth information is received.

For optional implementations of step S4402, reference can be made to optional implementations of step S2502 in FIG. 2E and other related parts in embodiments involved in FIG. 2E, which will not be repeated here.

In some embodiments, the fourth information is configured for the first network device 102 to determine first information. For optional implementations, reference can be made to optional implementations of step S2503 in FIG. 2E and other related parts in embodiments involved in FIG. 2E, which will not be repeated here.

At step S4403, first information is determined.

For optional implementations of step S4403, reference can be made to optional implementations of step S2503 in FIG. 2E and other related parts in embodiments involved in FIG. 2E, which will not be repeated here.

At step S4404, the first information is sent.

For optional implementations of step S4404, reference can be made to optional implementations of step S2504 in FIG. 2E and other related parts in embodiments involved in FIG. 2E, which will not be repeated here.

At step S4405, a reference signal is received.

For optional implementations of step S4405, reference can be made to optional implementations of step S2505 in FIG. 2E and other related parts in embodiments involved in FIG. 2E, which will not be repeated here.

In some embodiments, the reference signal is configured for a terminal 101 to determine channel information. For optional implementations, reference can be made to optional implementations of step S2506 in FIG. 2E and other related parts in embodiments involved in FIG. 2E, which will not be repeated here.

In some embodiments, the channel information is configured for the terminal 101 to determine output information of an activated terminal part model. For optional implementations, reference can be made to optional implementations of step S2507 in FIG. 2E and other related parts in embodiments involved in FIG. 2E, which will not be repeated here.

At step S4406, the channel information and the output information of the activated terminal part model are received.

For optional implementations of step S4406, reference can be made to optional implementations of step S2508 in FIG. 2E and other related parts in embodiments involved in FIG. 2E, which will not be repeated here.

At step S4407, output information of a network part model in at least one model pair is determined.

For optional implementations of step S4407, reference can be made to optional implementations of step S2509 in FIG. 2E and other related parts in embodiments involved in FIG. 2E, which will not be repeated here.

At step S4408, a monitoring result of the at least one model pair is determined.

For optional implementations of step S4408, reference can be made to optional implementations of step S2510 in FIG. 2E and other related parts in embodiments involved in FIG. 2E, which will not be repeated here.

The communication method involved in embodiments of the present disclosure may include at least one of S4401 to S4408. For example, S4401 may be implemented as an independent embodiment, S4401+S4403 may be implemented as an independent embodiment, S4402+S4403 may be implemented as an independent embodiment, S4401+S4402+S4403 may be implemented as an independent embodiment, S4401+S4403+S4404 may be implemented as an independent embodiment, S4402+S4403+S4404 may be implemented as an independent embodiment, S4401+S4402+S4403+S4404 may be implemented as an independent embodiment, S4406+S4407+S4408 may be implemented as an independent embodiment, S4405+S4406+S4407+S4408 may be implemented as an independent embodiment, S4402+S4403+...+S4407 may be implemented as an independent embodiment, S4401+S4403+S4404+...+S4408 may be implemented as an independent embodiment, S4401+S4402 +...+S4408 may be implemented as an independent embodiment, etc., but is not limited thereto.

In some embodiments, S4401 is optional, and may be omitted or replaced in different embodiments.

In some embodiments, S4402 is optional, and may be omitted or replaced in different embodiments.

In some embodiments, steps S4401 and S4402 may be executed in an alternate order or simultaneously.

In some embodiments, steps S4404 and S4405 may be executed in an alternate order or simultaneously.

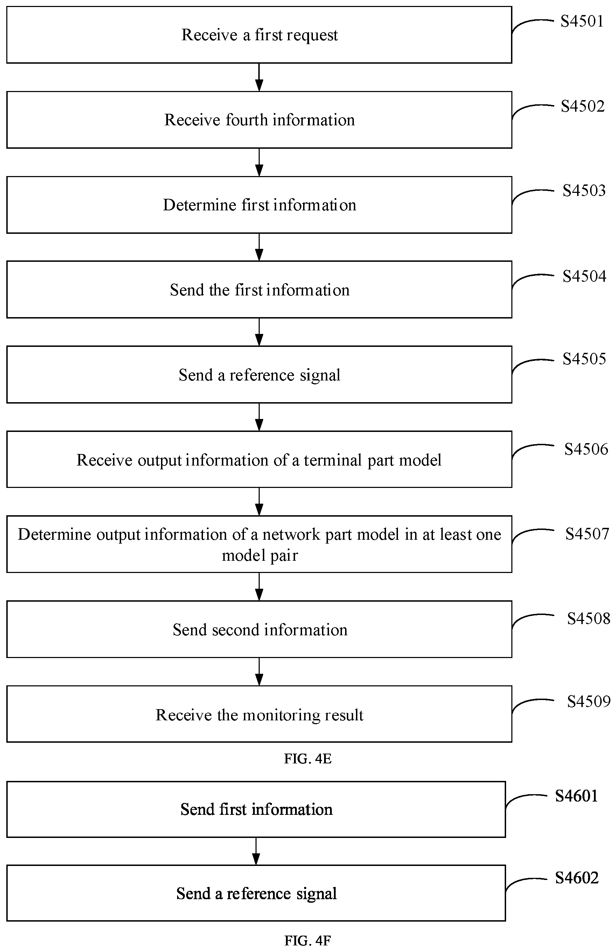

FIG. 4E is a schematic flowchart of a model monitoring method according to an embodiment of the present disclosure. As shown in FIG. 4E, this embodiment of the present disclosure relates to a model monitoring method performed by a first network device 102. The method includes the following steps.

At step S4501, a first request is received.

For optional implementations of step S4501, reference can be made to optional implementations of step S2601 in FIG. 2F and other related parts in embodiments involved in FIG. 2F, which will not be repeated here.

At step S4502, fourth information is received.

For optional implementations of step S4502, reference can be made to optional implementations of step S2602 in FIG. 2F and other related parts in embodiments involved in FIG. 2F, which will not be repeated here.

At step S4503, first information is determined.

For optional implementations of step S4503, reference can be made to optional implementations of step S2603 in FIG. 2F and other related parts in embodiments involved in FIG. 2F, which will not be repeated here.

At step S4504, the first information is sent.

For optional implementations of step S4504, reference can be made to optional implementations of step S2604 in FIG. 2F and other related parts in embodiments involved in FIG. 2F, which will not be repeated here.

At step S4505, a reference signal is sent.

For optional implementations of step S4505, reference can be made to optional implementations of step S2605 in FIG. 2F and other related parts in embodiments involved in FIG. 2F, which will not be repeated here.

In some embodiments, the reference signal is configured for a terminal 101 to determine channel information. For optional implementations, reference can be made to optional implementations of step S2606 in FIG. 2F and other related parts in embodiments involved in FIG. 2F, which will not be repeated here.

In some embodiments, the channel information is configured for the terminal 101 to determine output information of an activated terminal part model. For optional implementations, reference can be made to optional implementations of step S2607 in FIG. 2F and other related parts in embodiments involved in FIG. 2F, which will not be repeated here.

At step S4506, output information of a terminal part model is received.

For optional implementations of step S4506, reference can be made to optional implementations of step S2608 in FIG. 2F and other related parts in embodiments involved in FIG. 2F, which will not be repeated here.

At step S4507, output information of a network part model in at least one model pair is determined.

For optional implementations of step S4507, reference can be made to optional implementations of step S2609 in FIG. 2F and other related parts in embodiments involved in FIG. 2F, which will not be repeated here.

At step S4508, second information is sent.

For optional implementations of step S4508, reference can be made to optional implementations of step S2610 in FIG. 2F and other related parts in embodiments involved in FIG. 2F, which will not be repeated here.

In some embodiments, the second information is configured for the terminal 101 to determine a monitoring result of the at least one model pair. For optional implementations, reference can be made to optional implementations of step S2611 in FIG. 2F and other related parts in embodiments involved in FIG. 2F, which will not be repeated here.

At step S4509, the monitoring result is received.

For optional implementations of step S4509, reference can be made to optional implementations of step S2612 in FIG. 2F and other related parts in embodiments involved in FIG. 2F, which will not be repeated here.

The communication method involved in embodiments of the present disclosure may include at least one of S4501 to S4509. For example, S4501 may be implemented as an independent embodiment, S4501+S4503 may be implemented as an independent embodiment, S4501+S4502+S4503 may be implemented as an independent embodiment, S4502+S4503 may be implemented as an independent embodiment, S4501+S4502+S4503+S4504 may be implemented as an independent embodiment, S4504+S4505 may be implemented as an independent embodiment, S4505+S4506+...+S4509 may be implemented as an independent embodiment, S4501+S4503+S4504+...+S4509 may be implemented as an independent embodiment, S4503+S4504+...+S4509 may be implemented as an independent embodiment, S4501+S4502+...+S4509 may be implemented as an independent embodiment, etc., but is not limited thereto.

In some embodiments, S4501 is optional, and may be omitted or replaced in different embodiments.

In some embodiments, S4502 is optional, and may be omitted or replaced in different embodiments.

In some embodiments, steps S4501 and S4502 may be executed in an alternate order or simultaneously.

In some embodiments, steps S4504 and S4505 may be executed in an alternate order or simultaneously.

FIG. 4F is a schematic flowchart of a model monitoring method according to an embodiment of the present disclosure. As shown in FIG. 4F, this embodiment of the present disclosure relates to a model monitoring method performed by a first network device 102. The method includes the following steps.

At step S4601, first information is received.

For optional implementations of step S4601, reference can be made to optional implementations of step S2101 in FIG. 2A, step S2201 in FIG. 2B, step S2301 in FIG. 2C, step S2401 in FIG. 2D, step S2504 in FIG. 2E, step S2604 in FIG. 2F, step S4101 in FIG. 4A, step S4201 in FIG. 4B, step S4301 in FIG. 4C, step S4404 in FIG. 4D, and step S4504 in FIG. 4E and other related parts in embodiments involved in FIG. 2A-FIG. 2F and FIG. 4A-FIG. 4E, which will not be repeated here.

At step S4602, a reference signal is sent.

For optional implementations of step S4602, reference can be made to optional implementations of step S2102 in FIG. 2A, step S2202 in FIG. 2B, step S2302 in FIG. 2C, step S2402 in FIG. 2D, step S2502 in FIG. 2E, step S2602 in FIG. 2F, step S4102 in FIG. 4A, step S4202 in FIG. 4B, step S4402 in FIG. 4C, step S4405 in FIG. 4D, and step S4505 in FIG. 4E and other related parts in embodiments involved in FIG. 2A-FIG. 2F and FIG. 4A-FIG. 4E, which will not be repeated here.

The communication method involved in embodiments of the present disclosure may include at least one of S4601 to S4602. For example, S4601 may be implemented as an independent embodiment, S4602 may be implemented as an independent embodiment, S4601+S4602 may be implemented as an independent embodiment, etc., but is not limited thereto.

In some embodiments, steps S4601 and S4602 may be executed in an alternate order or simultaneously.

The following provides an exemplary introduction to the methods described in the above embodiments.

In some embodiments, an entity may be used to monitor M inactive model pairs.

In some embodiments, the entity is a third-party server, such as a terminal OTT server.

Optionally, monitoring of inactive models is performed by the terminal server, including:
1. The network sends a signaling to the terminal to instruct the terminal to monitor specified or all inactive model pairs. The signaling includes at least one of indication information for monitoring models, IDs of models to be activated, thresholds for determining monitoring results, and reporting formats for the monitoring results. The monitoring results may be in the form of the performance of the monitored models or calculated monitoring result values, such as intermediate KPI or final KPI values.
2. The terminal transmits the channel information measured based on downlink pilot and/or the information contained in the signaling sent by the network to the terminal server. The monitoring results of respective model pairs are determined by the terminal server, which then sends the monitoring results to the terminal.
3. The terminal then transmits the monitoring results to the network in a periodic, semi-periodic, aperiodic, or event-triggered manner. The monitoring results may refer to the monitoring results of all or some inactive models specified by the network, or monitoring results of a part of all or some inactive models specified by the network. When only reporting the monitoring results of a part of the models, the identification information of these models, such as the model IDs, may also be sent to the network.

Optionally, monitoring of inactive models is performed by the network server, including:
1. The network sends a signaling to the terminal to instruct the terminal to send channel information measured based on downlink pilot to the network.
2. The network sends the measured channel information to the network server, and the monitoring results of respective model pairs are determined by the network server. Then the network server sends the monitoring results to the network.

In some embodiments, the entity is a terminal, and monitoring of inactive models is performed by the terminal, including:
The terminal determines the monitoring results of respective model pairs based on the channel information measured based on the downlink pilot, and sends the monitoring results to the network.

In some embodiments, the entity is the network, and monitoring of inactive models is performed by the network, including:
1. The network sends a signaling to the terminal to instruct the terminal to send the channel state information determined based on downlink pilot measurement to the network.
2. The network determines the monitoring results of respective model pairs based on the received channel information.

In some embodiments, both the terminal and the network entities jointly monitor M model pairs of inactive CSI generation part models deployed in the terminal and inactive CSI recovery part models deployed in the network.

Optionally, the network side monitors the results of inactive model pairs, including:
1. The network signals to activate only 1 or 1<K inactive model pairs, where the value of K is determined based on the maximum number of models allowed to run simultaneously reported by the UE and the number of models currently running. This signaling contains the model ID or function ID information of the model pairs to be activated, or other indication information indicating which model pairs need to be activated. The network provides the signaling M times to the terminal, to activate M model pairs. Alternatively, the terminal sends a signaling request to the network to activate 1 or 1<K inactive model pairs. Optionally, the network instructs the UE to activate all inactive model pairs through a single signaling.
2. The terminal determines the models that need to be activated based on the received signaling (i.e. the CSI generation part models on the terminal side), and sends the input and output information of the activated models to the network. The activated models at least include one or K previously inactive models determined by the network and then activated, as indicated by the signaling sent to the terminal. If the input information of each activated model is the same, only the input information of one model is reported.
3. The network determines the monitoring results of M originally inactive model pairs based on the input and output information of the activated models described in 2.

Optionally, the terminal side monitors the results of inactive model pairs, including:
1. The network signals to activate only 1 or 1<K inactive model pairs, or the terminal sends a signaling request to the network to activate the specified 1 or 1<K inactive model pairs.
2. The terminal sends the output information of the CSI generation model in the activated 1 or 1<K model pairs to the network. The network uses the received output information as input information of the CSI recovery model in the activated 1 or 1<K model pairs, and can obtain the output information of the corresponding CSI recovery part model. Finally, the network sends the output information of the CSI recovery part model to the terminal. Alternatively, the network may send the beamforming CSI-RS to the terminal.
3. The terminal determines the results of M inactive model pairs based on the received output information of the CSI recovery part model sent by the network or the received beamforming CSI-RS.
4. The terminal then sends the monitoring results to the network through periodic, semi continuous, non-periodic, or event triggered methods. The monitoring results may refer to the monitoring results of all inactive models in the network, or may refer to the monitoring results of some models in the candidate inactive models in the network. When only reporting the monitoring results of a portion of the models, it is also necessary to send the indication information of that portion of the models, such as the model ID, to the network.

In some embodiments, in addition to monitoring the M inactive model pairs mentioned above, it is also possible to only monitor N<M inactive model pairs among the M models to reduce the processing complexity or signaling overhead of the terminal. The N model pairs may be indicated to the terminal through a signaling sent by the network, or the UE sends a signaling request to activate and monitor the designated N<M model pairs among M inactive model pairs of CSI generation part models and CSI recovery part models.

In some embodiments, the signaling sent by the network to the terminal includes one or more combinations of RRC, MAC-CE, or DCI signaling. The way in which the terminal sends the signaling request to the network includes at least one of periodic, semi-persistent, non-periodic, or event triggered.

In order to better understand the above schemes, several embodiments are provided below for example.

### Embodiment 1 (Single Side (Terminal Server) Monitoring Inactive Models):

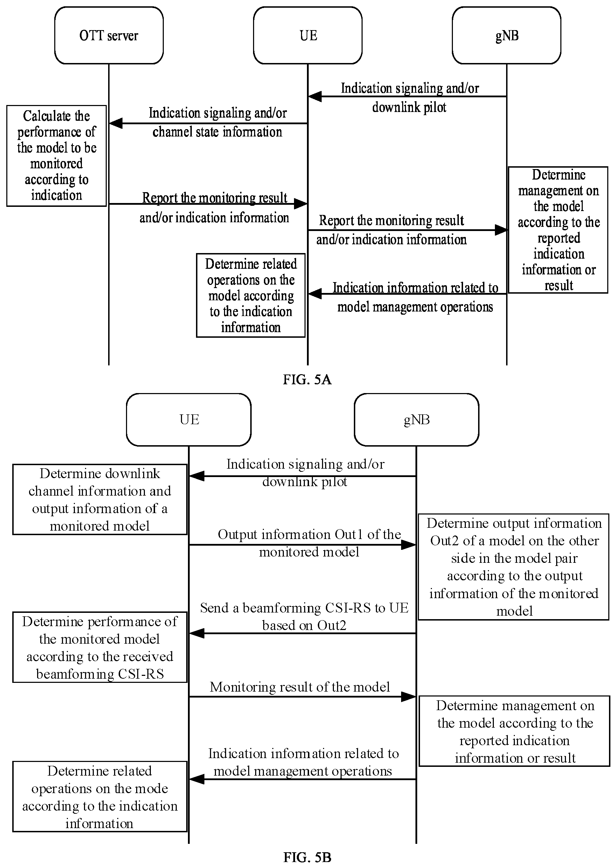

It is assumed that the OTT server of the terminal has trained multiple CSI generation part models and CSI recovery part models through model training mode 1, and M model pairs are in an inactive state. FIG. 5A shows a workflow for monitoring inactive models based on a single side.

The specific steps include at least one of the following.

Step 1: gNB sends the RRC or DCI signaling to UE indicating the monitoring of inactive models or model pairs.

The signaling may contain at least one of the following information:
Model ID to be activated: If it indicates monitoring only a portion of inactive models, or when the model is managed based on the model ID, the ID of the model to be activated may be included. If all models need to be monitored, the signaling may not include this ID information. Optionally, the model is managed based on the function ID, and the function ID to be activated is included in the signaling.

Threshold for determining the monitoring result of the model: If the monitoring performance indicator is an intermediate KPI, such as SGCS, gNB can configure the threshold for SGCS to UE through the RRC signaling. UE sends this threshold to OTT server for calculating the monitoring result of the model.

The reporting form of the monitoring result: Form 1) the performance of the monitored model is good or bad. If the performance of the monitored model meets the requirements or is greater than the threshold when compared with the threshold, the model is considered a good model, otherwise it is considered a poor model. Form 2) the calculated monitoring result value, such as the SGCS of the model being 0.8.

In addition, gNB also sends a downlink pilot signal such as CSI-RS to UE for downlink channel estimation.

Step 2: The UE determines which models to monitor based on the information contained in the received signaling. Based on the received pilot signal, the downlink channel information is estimated. The channel state information (CSI) in FIG. 5A may be the estimated original channel information or the feature vector information determined by singular value decomposition of the channel information by the UE. UE sends all or part of the information contained in the received signaling, as well as the determined channel state information, to the OTT server.

Step 3: The OTT server calculates the performance of the inactive model to be monitored based on the information indicated by the received signaling and CSI, and sends the monitoring results to the UE. Alternatively, if the OTT server only sends the models with good performance to the UE, it also needs to send the indication information of these models with good performance to the UE.

Step 4: The UE sends the monitoring results and/or indication information sent by the OTT server to the gNB.

Step 5: gNB determines the management on the models based on the received monitoring results and/or indication information, such as whether to perform model switching, that is, to deactivate the original model in use and activate a new model, or to perform a fall back operation, that is, to implement CSI feedback based on traditional non-AI models.

Step 6: gNB sends the indication information of the model management operation to the UE through signaling. The UE determines the operation on the model based on the indication information, such as deactivating the current model in use and activating a new model, or performing traditional non-AI CSI feedback. Alternatively, if gNB still uses the original model and does not perform any other model management operations, step 6 is not required.

### Embodiment 2 (Bilateral monitoring of inactive models, and results of inactive model pairs monitored by the terminal side)

Assuming that M inactive models or model pairs are deployed on the UE side, FIG. 5B shows the workflow for monitoring inactive models based on bilateral interaction.

The specific steps include at least one of the following:
Step 1: The gNB instructs the UE to activate one of the M inactive models through RRC or DCI signaling, and the indication information includes the model ID. In addition, the gNB also sends downlink CSI-RS to the UE.
Step 2: The UE activates the corresponding model based on the indication signaling, such as the CSI generation part model with an activated model ID of 2. Then, based on the received CSI-RS, the UE estimates the downlink channel information and determines the CSI as the input information for the activated model. Through the inference of this CSI generation part model, the output information Out1 of the model can be obtained, and Out1 is quantized and reported to the gNB.
Step 3: gNB takes the received Out1 as the input of the CSI recovery part model on the gNB side with model ID 2, and then infers the corresponding output information Out2 through this CSI recovery part model. gNB sends beamforming CSI-RS to UE, and the beam of CSI-RS is determined based on Out2. Optionally, gNB can directly send Out2 to UE.
Step 4: The UE estimates the downlink effective channel information based on the received beamforming CSI-RS, calculates the monitoring result of the model through the estimated effective channel information, such as calculating the throughput or SINR corresponding to the model, and reports the calculated result to the gNB.
Steps 5 and 6 are similar to those in Embodiment 1 and will not be repeated here.

It should be noted that the above steps assume the working process of activating only one model at a time. If monitoring M>1 models, multiple signaling can be used to complete the monitoring of M inactive models through the above steps.

Embodiments of the disclosure also provide an apparatus for implementing any one of the above methods. For example, an apparatus is provided, including units for performing the steps executed by the terminal in any one of the above methods. Further, another apparatus is provided, including units or modules for performing the steps executed by the network device (for example, the access network device, the core network function node, the core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

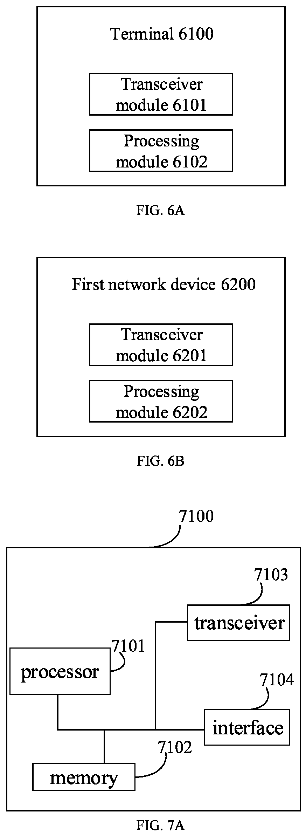

FIG. 6A is a block diagram of a terminal according to an embodiment of the present disclosure. As shown in FIG. 6A, the terminal 6100 may include at least one of a transceiver module 6101 or a processing module 6102. In some embodiments, the transceiver module is configured to receive first information sent by a first network device, wherein the first information is configured for monitoring of at least one inactive model pair; the processor module is configured to obtain channel information, wherein the channel information is obtained by performing channel measurement on a reference signal sent by the first network device, and the channel information is configured for the monitoring of the at least one inactive model pair; wherein the monitoring of the at least one inactive model pair includes monitoring of a terminal part model and/or a network part model in each model pair.

Optionally, the above transceiver module is configured to perform at least one of the steps related to sending and/or receiving performed by the terminal 101 in any of the above methods, which will not be repeated here. The above processing module is configured to perform at least one of the steps performed by the terminal 101 in any of the above methods, which will not be repeated here.

FIG. 6B is a block diagram of a network device according to an embodiment of the present disclosure. As shown in FIG. 6B, the network device 6200 may include at least one of a transceiver module 6201 or a processing module 6202. In some embodiments, the transceiver module is configured to send first information to a terminal, wherein the first information is configured for monitoring of at least one inactive model pair; the transceiver module is further configured to send a reference signal to the terminal, wherein the reference signal is configured for the terminal to perform channel measurement to obtain channel information, and the channel information is configured for the monitoring of the at least one inactive model pair; wherein the monitoring of the at least one inactive model pair includes monitoring of a terminal part model and/or a network part model in each model pair.

Optionally, the above transceiver module is configured to perform at least one of the sending and/or receiving related steps performed by the first network device 102 in any of the above methods, which will not be repeated here. The above processing module is configured to perform at least one of the steps performed by the first network device 102 in any of the above methods, which will not be repeated here.

In some embodiments, the transceiver module may include a sending module and/or a receiving module, which may be separate or integrated together. Optionally, the transceiver module may be interchangeable with the transceiver.

In some embodiments, the processing module may be a single module or may include multiple sub modules. Optionally, the above multiple sub modules each perform all or part of the steps required by the processing module. Optionally, the processing module may be interchangeable with the processor.

FIG. 7A is a block diagram of a communication device 7100 according to an embodiment of the disclosure. The communication device 7100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 7100 may be configured to implement the method in the above method embodiments. For details, please refer to the description in the above method embodiments.

As shown in FIG. 7A, the communication device 7100 may include one or more processors 7101. The processor 7101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data. The processor 7101 is configured to call instructions so that the communication device 7100 may implement any one of the above methods.

In some embodiments, the communication device 7100 may further include one or more transceivers 7102. When the communication device 7100 includes one or more transceivers 7102, at least one of the communication steps such as sending and/or receiving in the above methods (for example, step S2101, step S2102, but not limited thereto) are performed by the transceiver 7102, and at least one of other steps are performed by the processor 7101. In optional embodiments, the transceiver may include a receiver and/or a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In some embodiments, the communication device 7100 further includes one or more memories 7103 for storing data. Optionally, all or part of the memories 7103 may also be located outside of the communication device 7100. In optional embodiments, the communication device 7100 may include one or more interface circuits 7104. Optionally, the interface circuit 7104 is connected to the memory 7102. The interface circuit 7104 may be configured to receive signals from the memory 7102 or other devices, and may be configured to send the signals to the memory 7102 or other devices. For example, the interface circuit 7104 may read instructions stored in the memory 7102 and send the instructions to the processor 7101.

The communication device 7100 described in the above embodiments may be a network device or a terminal, but the scope of the communication device 7100 described in the disclosure is not limited, and a structure of the communication device 7100 may not be limited by FIG. 7A. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

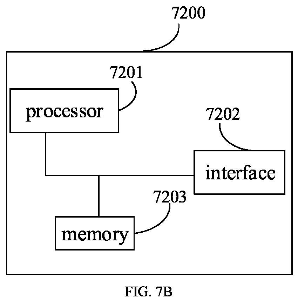

FIG. 7B is a block diagram of a chip 7200 according to an embodiment of the disclosure. For a case where the communication device 7100 may be a chip or a chip system, reference may be made to the block diagram of the chip 7200 shown in FIG. 7B, which it is not limited herein.

The chip 7200 includes one or more processors 7201. The chip 7200 is configured to implement any of the methods above.

In some embodiments, the chip 7200 further includes one or more interface circuits 7202. Optionally, terms such as interface circuit, interface, and transceiver pins may be interchangeable with each other. In some embodiments, the chip 7200 further includes one or more memories 7203 for storing data. Optionally, all or part of the memories 7203 may be located outside of the chip 7200. Optionally, the interface circuit 7202 is connected to the memory 7203, the interface circuit 7202 may be configured to receive data from the memory 7203 or other devices, and the interface circuit 7202 may be configured to send data to the memory 7203 or other devices. For example, the interface circuit 7202 may read data stored in the memory 7203 and send the data to the processor 7201.

In some embodiments, the interface circuit 7202 performs at least one of the communication steps such as sending and/or receiving in the above methods (e.g., step S2101, step S2102, but not limited to). The interface circuit 7202 performs communication steps such as sending and/or receiving in the above methods, for example, referring to the data exchange between the processor 7201, chip 7200, memory 7203, or transceiver devices. In some embodiments, the processor 7201 performs at least one of the other steps.

The modules and/or devices described in various embodiments such as virtual devices, physical devices, chips, etc. can be combined or separated arbitrarily according to the situation. Optionally, some or all of the steps can also be executed collaboratively by multiple modules and/or devices, without limitation here.

The disclosure also provides a storage medium for storing instructions. When the instructions are running on the communication device 7100, the communication device 7100 is caused to implement any one of the above methods. Optionally, the above storage medium is an electronic storage medium. Optionally, the above storage medium is a computer-readable storage medium, which is not limited herein. The above storage medium may also be a storage medium readable by other devices. Optionally, the above storage medium may be a non-transitory storage medium, which is not limited to herein. The above storage medium may also be a transitory storage medium.

The disclosure also provides a program product. When the program product is executed by the communication device 7100, the communication device 7100 is caused to implement any one of the above methods. Optionally, the above program product is a computer program product.

The disclosure also provides a computer program. When the computer program is running on a computer, the computer is caused to implement any one of the above methods.

In the above embodiments, the functions may be fully or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are fully or partially generated when the computer program is loaded and executed on a computer. The computer may be a general-purpose computer, a special-purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), a semiconductor medium (such as a solid state disk (SSD)), or the like.

Those skilled in the related art may realize that units and algorithm steps of the examples described in embodiments of the disclosure may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the disclosure.

Those skilled in the related art may clearly understand that, for a specific working process of a system, an apparatus and a unit described above, reference may be made to a corresponding process in the above method embodiments, which will not be repeated herein.

The above are only implementations of the disclosure. However, the protection scope of the disclosure is not limited here. Changes and substitutions that may be easily considered by those skilled in the art shall be included within the protection scope of the disclosure. Thus, the protection scope of the disclosure shall be subject to the protection scope of claims.

## Claims

1. A model monitoring method, performed by a terminal, comprising:
receiving first information sent by a first network device, wherein the first information is configured for monitoring of at least one inactive model pair; and
obtaining channel information, wherein the channel information is obtained by performing channel measurement on a reference signal sent by the first network device, and the channel information is configured for the monitoring of the at least one inactive model pair;
wherein the monitoring of the at least one inactive model pair comprises monitoring of a terminal part model and/or a network part model in each model pair.

2. The method of claim 1, wherein the first information is configured to indicate the terminal to obtain a monitoring result of the at least one inactive model pair, and the method further comprises:
sending the channel information and/or the first information to a second network device;
receiving the monitoring result of the at least one inactive model pair sent by the second network device, wherein the monitoring result is determined by the second network device based on the channel information; and
sending the monitoring result to the first network device.

3. The method of claim 1, wherein the first information is configured to indicate the terminal to send the channel information, and the method further comprises:
sending the channel information to the first network device, wherein the channel information is configured for a third network device to determine a monitoring result of the at least one inactive model pair based on the channel information.

4. The method of claim 1, wherein the first information is configured to indicate the terminal to obtain a monitoring result of the at least one inactive model pair, and the method further comprises:
determining the monitoring result of the at least one inactive model pair based on the channel information; and
sending the monitoring result to the first network device.

5. The method of claim 1, wherein the first information is configured to indicate the terminal to send the channel information, and the method further comprises:
sending the channel information to the first network device, wherein the channel information is configured for the first network device to determine a monitoring result of the at least one inactive model pair based on the channel information.

6. The method of any one of claims 2-5, wherein the first information comprises at least one of:
identification information of the at least one inactive model pair;
a first threshold, wherein the first threshold is configured for determining the monitoring result; or
a format of the monitoring result.

7. The method of claim 1, wherein the first information is configured to indicate the terminal to activate one or more of the at least one inactive model pair, and the method further comprises:
inputting the channel information into one or more activated model pairs, to obtain output information of a terminal part model in the activated model pair; and
sending the channel information and the output information of the terminal part model to the first network device, wherein the channel information and the output information of the terminal part model are configured for the first network device to determine a monitoring result of the one or more activated model pairs.

8. The method of claim 1, wherein the first information is configured to indicate the terminal to activate one or more of the at least one inactive model pair, and the method further comprises:
inputting the channel information into one or more activated model pairs, to obtain output information of a terminal part model in the activated model pair;
sending the output information of the terminal part model to the first network device, wherein the output information of the terminal part model is configured for the first network device to determine output information of a network part model in the activated model pair;
receiving second information sent by the first network device, wherein the second information is the output information of the network part model, or a channel status information reference signal (CSI-RS) for beamforming, wherein a beam corresponding to the CSI-RS is determined based on the output information of the network part model;
determining a monitoring result of the one or more activated model pairs based on the channel information and the second information; and
sending the monitoring result to the first network device.

9. The method of claim 7 or 8, wherein the first information is sent multiple times, and the first information sent each time indicates a different model pair to be activated.

10. The method of claim 7 or 8, wherein the terminal sends output information of terminal part models in multiple model pairs to the first network device, and the method further comprises:
sending third information to the first network device, wherein the third information is configured to determine a correspondence relationship between the output information of the terminal part model and the model pair.

11. The method of any one of claims 7-10, further comprising:
sending a first request to the first network device, wherein the first request is configured to request the first network device to send the first information.

12. The method of claim 11, wherein
the first request is sent periodically; or
the first request is sent semi-continuously; or
the first request is sent non-periodically; or
the first request is triggered and sent based on an event.

13. The method of any one of claims 7-12, wherein the first information comprises identification information of one or more model pairs to be activated.

14. The method of any one of claims 7-13, further comprising:
sending fourth information to the first network device, wherein the fourth information indicates an inactive model currently supported by the terminal.

15. The method of any one of claims 1-14, wherein the first information is contained in at least one of:
a radio resource control (RRC) signaling;
a media access control control element (MAC-CE) signaling; or
a downlink control information (DCI) signaling.

16. A model monitoring method, performed by a first network device, comprising:
sending first information to a terminal, wherein the first information is configured for monitoring of at least one inactive model pair; and
sending a reference signal to the terminal, wherein the reference signal is configured for the terminal to perform channel measurement to obtain channel information, and the channel information is configured for the monitoring of the at least one inactive model pair;
wherein the monitoring of the at least one inactive model pair comprises monitoring of a terminal part model and/or a network part model in each model pair.

17. The method of claim 16, wherein the first information is configured to indicate the terminal to obtain a monitoring result of the at least one inactive model pair, and the method further comprises:
receiving the monitoring result of the at least one inactive model pair sent by the terminal, wherein the monitoring result is determined by a second network device based on the channel information and sent by the second network device to the terminal.

18. The method of claim 16, wherein the first information is configured to indicate the terminal to send the channel information, and the method further comprises:
receiving the channel information sent by the terminal; and
sending the channel information to a third network device, wherein the channel information is configured for the third network device to determine a monitoring result of the at least one inactive model pair based on the channel information.

19. The method of claim 16, wherein the first information is configured to indicate the terminal to obtain a monitoring result of the at least one inactive model pair, and the method further comprises:
receiving the monitoring result of the at least one inactive model pair sent by the terminal, wherein the monitoring result is determined by the terminal based on the channel information.

20. The method of claim 16, wherein the first information is configured to indicate the terminal to send the channel information, and the method further comprises:
receiving the channel information sent by the terminal; and
determining a monitoring result of the at least one inactive model pair based on the channel information.

21. The method of any one of claims 17-20, wherein the first information comprises at least one of:
identification information of the at least one inactive model pair;
a first threshold, wherein the first threshold is configured for determining the monitoring result; or
a format of the monitoring result.

22. The method of claim 16, wherein the first information is configured to indicate the terminal to activate one or more of the at least one inactive model pair, and the method further comprises:
receiving the channel information and output information of a terminal part model in an activated model pair sent by the terminal, wherein the output information of the terminal part model is obtained by the terminal through inputting the channel information into one or more activated model pairs; and
determining a monitoring result of the one or more activated model pairs based on the channel information and the output information of the terminal part model.

23. The method of claim 16, wherein the first information is configured to indicate the terminal to activate one or more of the at least one inactive model pair, and the method further comprises:
receiving the channel information and output information of a terminal part model in an activated model pair sent by the terminal, wherein the output information of the terminal part model is obtained by the terminal through inputting the channel information into one or more activated model pairs;
inputting the output information of the terminal part model into the one or more activated model pairs, to determine output information of a network part model in the activated model pair;
sending second information to the terminal, wherein the channel information and the second information are configured for the terminal to determine a monitoring result of the one or more activated model pairs; wherein the second information is the output information of the network part model, or a channel status information reference signal (CSI-RS) for beamforming, wherein a beam corresponding to the CSI-RS is determined based on the output information of the network part model; and
receiving the monitoring result sent by the terminal.

24. The method of claim 19 or 20, wherein the first information is sent multiple times, and the first information sent each time indicates a different model pair to be activated.

25. The method of claim 19 or 20, wherein the terminal sends output information of terminal part models in multiple model pairs to the first network device, and the method further comprises:
receiving third information sent by the terminal, wherein the third information is configured to determine a correspondence relationship between the output information of the terminal part model and the model pair.

26. The method of any one of claims 19-25, further comprising:
receiving a first request sent by the terminal, wherein the first request is configured to request the first network device to send the first information.

27. The method of claim 26, wherein
the first request is sent periodically; or
the first request is sent semi-continuously; or
the first request is sent non-periodically; or
the first request is triggered and sent based on an event.

28. The method of any one of claims 22-27, wherein the first information comprises identification information of one or more model pairs to be activated.

29. The method of any one of claims 22-28, further comprising:
receiving fourth information sent by the terminal, wherein the fourth information indicates an inactive model currently supported by the terminal; and
determining a number of activated model pairs indicated by the first information based on the fourth information.

30. The method of any one of claims 15-29, wherein the first information is contained in at least one of:
a radio resource control (RRC) signaling;
a media access control control element (MAC-CE) signaling; or
a downlink control information (DCI) signaling.

31. A model monitoring method, comprising:
sending by a first network device, first information to a terminal, wherein the first information is configured for monitoring of at least one inactive model pair; and
obtaining by the terminal, channel information, wherein the channel information is obtained by performing channel measurement on a reference signal sent by the first network device, and the channel information is configured for the monitoring of the at least one inactive model pair;
wherein the monitoring of the at least one inactive model pair comprises monitoring of a terminal part model and/or a network part model in each model pair.

32. A terminal, comprising:
a transceiver module, configured to receive first information sent by a first network device, wherein the first information is configured for monitoring of at least one inactive model pair; and
a processing module, configured to obtain channel information, wherein the channel information is obtained by performing channel measurement on a reference signal sent by the first network device, and the channel information is configured for the monitoring of the at least one inactive model pair;
wherein the monitoring of the at least one inactive model pair comprises monitoring of a terminal part model and/or a network part model in each model pair.

33. A first network device, comprising:
a transceiver module, configured to send first information to a terminal, wherein the first information is configured for monitoring of at least one inactive model pair;
wherein the transceiver module is further configured to send a reference signal to the terminal, wherein the reference signal is configured for the terminal to perform channel measurement to obtain channel information, and the channel information is configured for the monitoring of the at least one inactive model pair;
wherein the monitoring of the at least one inactive model pair comprises monitoring of a terminal part model and/or a network part model in each model pair.

34. A terminal, comprising:
one or more processors;
wherein the terminal is configured to implement the model monitoring method of any one of claims 1-15.

35. A first network device, comprising:
one or more processors;
wherein the first network device is configured to implement the model monitoring method of any one of claims 16-30.

36. A communication system, comprising a terminal and a first network device, wherein the terminal is configured to implement the model monitoring method of any one of claims 1-15, and the first network device is configured to implement the model monitoring method of any one of claims 16-30.

37. A storage medium having stored instructions, wherein when the instructions are run on a communication device, the communication device is caused to implement the model monitoring method of any one of claims 1-15 or 16-30.
